# EUROPEAN PATENT APPLICATION

(11) **EP 4 835 752 A1**
(43) Date of publication of application: **04.11.2026**
(21) Application number: 25315154.2
(22) Date of filing: 02.05.2025
(51) Int. Cl.: G06N 10/40, G06N 10/70

(54) **METHOD AND APPARATUS FOR SETTING A BASIS STATE OF A QUBIT**

(71) Applicant: Pasqal, 91120 Palaiseau (FR)
(72) Inventor: VIGNOLI, Louis, 91120 Palaiseau (FR); SCHOLL, Pascal, 91120 Palaiseau (FR); LE REGENT, François-Marie, 91120 Palaiseau (FR)
(74) Representative: Slingsby Partners LLP

(57) **Abstract**

There is presented a method for setting a basis state of a qubit of a quantum system. The qubit represented by an atom having first energy level representing a first basis state (|0>). The method comprising applying a magnetic field (B) to the atom to split a second energy level (104) into a plurality of sub-levels (108a/b/c). The magnetic field further splits a third energy level (106) into a plurality of sub-levels (110a/b/c). An Electro-Magnetic, EM, radiation (105) is applied to the atom to cause a transition (109) from: a first sub-level (108b) of the plurality of sub-levels (108a/b/c) of the second energy level (104); to, a first sub-level (110c) of the sub-levels (110a/b/c) of the third energy level (106). A first sub-level (108b) of the second energy level (104) is associated with a first orbital angular momentum (MOM2). The first sub-level (110c) of the third energy level (106) is associated with a second orbital angular momentum (MOM3) that is different to the first orbital angular momentum (MOM2). The second sub-level (108c) of the second energy level (104): at least partially represents a second basis state (|1〉); and, comprises either: A) a minimum energy (108a) of the sub-levels (108a/b/c) of the second energy level (104); or, B) a maximum energy (108c) of the sub-levels (108a/b/c) of the second energy level (104).

## Description

### Field

The present invention is in the field of establishing a basis state of a qubit, in particular where the qubit is represented by an atom, for example in a quantum computer.

### Background

Error correction in classical electronic computing has been used to help ensure computers use the correct intend logic values despite bit-errors undesirably occurring during computer processing. Error correction in classical electronic computing has been accomplished in different ways including by representing a logical state with multiple classical bits.

Classical errors occur by unwanted 'bit-flips', wherein, for example, with a single bit of '0' or '1', an intended '0' is undesirably flipped to a '1' or an intended '1' is undesirably flipped to a '0'. Error correcting provides an encoding for the bit or bit sequence. Different 'coding' systems exist, for example repetition coding wherein multiple bits represent one logical bit. A three-bit repetition code uses three bits to represent a single classical logical bit, for example 000 to represent 0, and 111 to represent 1. The 'distance' of a code 'd' is defined as the minimum number of errors that will change one codeword to another. Thus, the distance 'd' of a code relates to the number of errors it can correct 't'. The distance 'd' may be represented as follows: d=2t+1.

For example, an initial string of one bit being encoded by the three-bit code gives d=3 because the number of errors a three-bit code can correct is 1. This is because a bit value of 0, encoded by 000, can only have one of the bits flipped to 1 before the 3-bit code resembles a different initial digit. In other words, a single error in the middle digit '010' is still coded as 0 as the majority of digits are still '0', but two errors in the first two digits '110' leads to an incorrect inference of the value '1'. Hence t=1, in this example. Error correction codes are commonly described in terms of the [n, k, d] notation, where n is the total number of bits per codeword, k is the number of encoded bits (the length of the original bit-string) and d is the code distance.

Quantum computers (QC's) may also suffer from errors. Quantum Error Correction (QEC) typically provides multiple physical qubits to represent one or more logical qubits such that the correct intended logical state, the state of a particular logical qubit, can be determined from the multiple physical-qubit states despite a certain number of errors.

Although quantum error correction can borrow from classical error correction solution, quantum error correction still faces implementation challenges. These challenges arise from several factors. Firstly, classical codes typically rely on being able to duplicate a state, but quantum systems are subject to the no-cloning theorem. Secondly, there is no classical counterpart to phase flips (see below). Thirdly, there is a risk of wavefunction collapse during the error correction process.

Different error correcting codes have been developed to enable fault tolerant quantum computing. When a code is fault tolerant, it prevents the proliferation of errors in the system. Using these codes, one can suppress the logical error rate by increasing the redundancy (adding more and more physical qubits), provided that the error probability during each operation is below a threshold. The threshold error rate depends on the choice of error correcting code and the nature of the noise in the qubit.

Different errors can take place during a quantum computation. One form of error is coherent errors wherein one or more qubits are operated on resulting in an unintended phase on the block sphere. This presents an issue because the qubit is still in the computational space and undiagnosed after the gate operation is applied. Different types of coherent errors exist. Another form of errors are stochastic incoherent Pauli errors (X-, Y- and Z-errors), often arising from interactions with the environment, such as dephasing or depolarization. For these errors, the probability of occurrence, the error rate, is well known but the locations of errors are not. A further error type are erasure errors. Erasure errors are those errors wherein the Pauli error is not known but the location of the error, the qubit in error, can be identified. Erasure errors can be more desirable to encounter than bit flip or phase flip errors because of the certainty in the qubit being an error and thus having the ability to ignore the said qubit.

Another problem quantum computers face is 'leakage'. Leakage is a quantum error process in which a qubit ends up in a state outside of the computational subspace, for example in a neutral atom quantum computer, an atom transitioning to an energy state that is not a Rydberg state used for entangling, nor any of the qubit basis states. Generally, the larger variety of errors that a quantum computer is susceptible to, the more complex the error correcting code needs to be, hence the more qubits are needed to ensure a fault tolerant qubit. These errors are further discussed underneath.

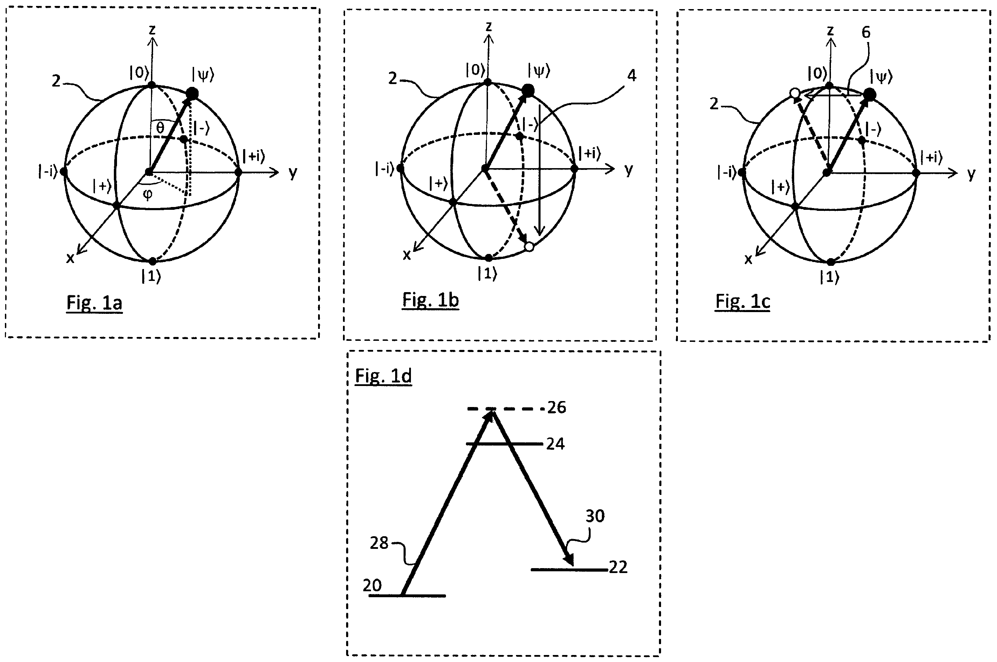

Firstly, we shall discuss coherent errors. Unlike classical bits, the unmeasured qubit state may take different values about the Bloch sphere 2, as shown in figure 1a, and as set out in equation 1: [Equ. 1] $\left|ψ\right〉 = cos \frac{θ}{2} \left|0\right〉 + {e}^{i \left(ϕ\right)} sin \frac{θ}{2} \left|1\right〉$ wherein the probability amplitudes obey equation 2 underneath. [Equ. 2] $1 = {\left|cos\frac{θ}{2}\right|}^{2} + {\left|{e}^{i \left(ϕ\right)}sin\frac{θ}{2}\right|}^{2}$

In figure 1a, the qubit state |ψ〉 is shown as a vector about Bloch sphere 2 wherein: the states of |0〉 and |1〉 occur along the positive and negative z axes; the states of |+i〉 and |-i〉 occur along the positive and negative y axes; the states of |+〉 and |-〉 occur along the positive and negative x axes; the term θ defining the angle of the vector |ψ〉 from the z axis; the term φ defining the angle of the vector |ψ〉, about the x-y plane, from the x axis.

Errors may occur from various processes such as incorrect encoding of qubit states. Turning back to figure 1a, such errors may occur by the vector |ψ〉 moving about the Bloch sphere 2 in θ and φ. A quantum error correction code with the ability to correct errors described by the X- and Z-Pauli matrices will be able to correct any coherent error. Pauli X-type errors can be thought of as quantum bit-flips 4 as shown on the Bloch sphere 2 in figure 1b. Such bit flip errors perform the following mapping (X) of qubit states: X|0〉 =|1〉, and X|1〉 = |0〉. The Pauli Z-error, is often referred to as a phase-flip 6 and is shown on the Bloch sphere 2 in figure 1c. Phase-flips perform the following mapping (Z) of qubit states: Z -|0〉 = |0〉, and Z|1〉= -|1〉.

Neutral atom quantum computers, operated in a digital process, employ gates in a quantum circuit. Gates may be single qubit gates such as Hadamard gates or multi-qubit gates such as CCZ gates that interact the qubits of the gate via the Rydberg blockade. The 'fidelity' of a gate is a term used when describing quantum computing gates to signify how close the operation gets during execution to the intended operation. The higher the fidelity, the higher the likelihood that the gate gets executed as intended. Errors therefore undesirably decrease a gate's fidelity.

For multi-qubit gates, the gate has a time duration over which it is executed. The longer the gate duration, the higher the likelihood that the Rydberg state undesirably decays into lower energy state. The time duration of the gate is inversely proportional to the Rabi frequency Ω brought about by the electromagnetic (EM) wave or signal driving the atoms of the gate. Since the Rabi frequency is proportional to the EM wave's amplitude, errors can be minimised by increasing the EM wave's amplitude, however in practice, Ω is often constrained by the available laser power.

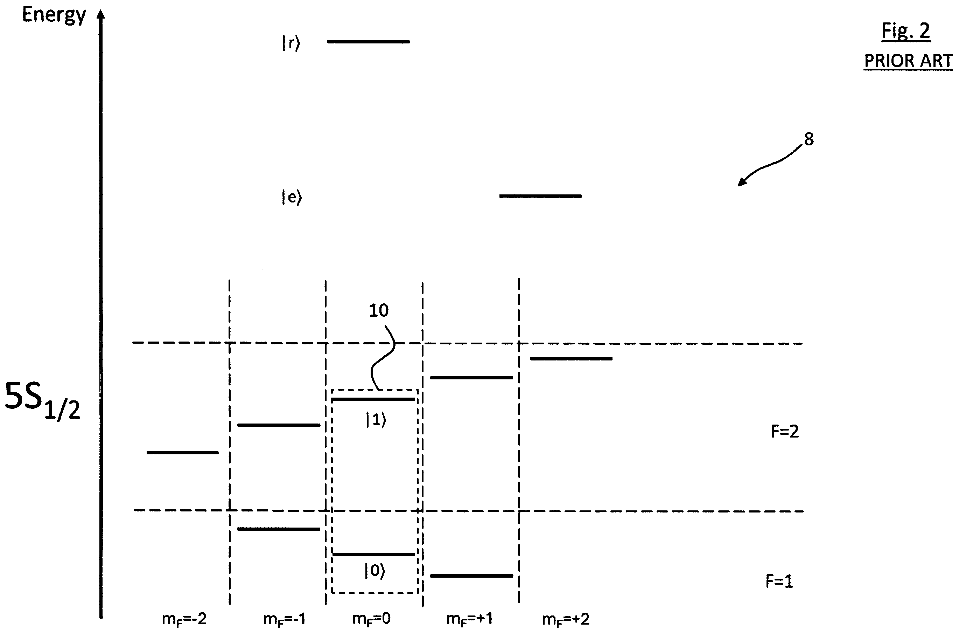

Figure 2 shows an energy level diagram 8 showing some of the energy levels of an atom for use in a gate-based neutral atom quantum computer of the prior art. The atom of the prior art, for figure 2, is Rubidium. Figure 2 shows the hyperfine structure of the atom wherein the application of a magnetic field splits the hyperfine energy level into sub-levels wherein each sublevel has a different energy level corresponding to a different quantum number m_{F}.

In this prior art scheme, the state |0〉 is on the level 5S_{1/2}, F=1, m_{F}=0, and the state |1) is on the level 5_{1/2}, F=2, m_{F}=0. Thus, the basis states are in the dashed box 10 (this set-up is also known as the 'clock qubit'). All the operations (single qubit gate and two qubit gate) of the quantum computer are performed on this encoding. In the same figure is shown an excited state |e> and a Rydberg state |r>.

Using this known 'clock qubit' encoding has several drawbacks. For QEC one of the main drawbacks is that the atom in a Rydberg state can decay by spontaneously emitting photons in several levels. This causes both leakage and Pauli errors that need to be corrected by a quantum error correction code. Furthermore, the neutral atom quantum computing platform, encoded as per figure 2, is subject to relatively qubit-unbiased noise. In other words, a qubit is likely to experience errors from several sources. The dominant error sources in such prior art implementations, such as figure 2, are leakage errors and atom loss errors. Such errors are described as Pauli errors, and Pauli error channels (X, Y, Z) are on the same order of magnitude in general. This partly comes from the usual qubit choice for alkaline atoms (and associated qubit operations), the so-called the 'clock qubit' using the two levels in the ground state that are insensitive to magnetic fields at first order. Error correcting multiple Pauli errors is complicated and requires many qubits.

The paper "Erasure conversion for fault-tolerant quantum computing in alkaline earth Rydberg atom arrays" by Y. Wu et. Al., Nature communications, 9th August 2022, describes how to encode Rydberg atom qubits in the hyperfine states of a metastable electronic level. In doing this the authors describe that the vast majority of errors (i.e., decays from the Rydberg state that is used to implement two-qubit gates) result in transitions out of the computational sub-space into levels whose population can be continuously monitored using cycling transitions that do not disturb the qubit levels. As a result, the location of these errors is revealed, converting them into erasures.

The paper "Logical quantum processor based on reconfigurable atom arrays" by D. Bluvstein et al., https://doi.org/10.48550/arXiv.2312.03982, describes using logical-level control and a zoned architecture in reconfigurable neutral atom arrays. The paper discusses a system combining high two-qubit gate fidelities, arbitrary connectivity, as well as fully programmable single-qubit rotations and mid-circuit readout. The paper further describes that operating this logical processor with various types of encodings, demonstrates improvement of a two-qubit logic gate by scaling surface code distance from d = 3 to d = 7, preparation of colour code qubits with break-even fidelities, fault-tolerant creation of logical GHZ states and feedforward entanglement teleportation, as well as operation of 40 colour code qubits. Using three-dimensional code blocks, the paper discusses realising computationally complex sampling circuits with up to 48 logical qubits entangled with hypercube connectivity with 228 logical two-qubit gates and 48 logical CCZ gates.

The paper "Hardware-Efficient, Fault-Tolerant Quantum Computation with Rydberg Atoms" by I. Cong et al., arXiv:2105.13501v3, (hereinafter 'Cong') describes a characterisation of sources of error in neutral atom quantum computers. Optical pumping is performed following every controlled-phase gate to correct for leakage into other ground states. Ancilla qubits measure the stabilizer eigenvalue, while other ancilla qubits A1 are used to detect and correct for Rydberg leakage errors. Cong describes that all gate errors are converted to Pauli-Z type errors (purple) and do not spread to other qubits. Figure 1c of Cong shows a level diagram showing an example encoding of a qubit in the hyperfine clock states of ⁸⁷Rb. In this figure of Cong, the |0〉 basis state is at the energy level 5S_{1/2} F=1, m_{F}=-1, whilst the |1〉 state is encoded in the 5S_{1/2} F=2, m_{F}=+1 energy level. The energy levels of Cong Figure 1c show that other energy level states exist for the same F=2 set of hyperfine energy levels. These other F=2 energy levels being at least the lower energy level of 5S_{1/2} F=2, mᵣ=0 and the higher energy level of 5S_{1/2} F=2, m_{F}=+2. Having the |1〉 basis state 5S_{1/2} F=2, m_{F}=+1 still allows leakage from that state to other energy levels of the atom.

### Summary

In a first aspect there is presented a method for setting a basis state of a qubit of a quantum system; the quantum system comprising an atom for representing the qubit, wherein the atom comprises:
a first energy level (102) associated with a first basis state (|0〉) of the qubit; the first energy level (102) being a hyperfine energy level;
a second energy level (104) associated with a second basis state (|1〉) of the qubit; the second energy level (104) being a hyperfine energy level and comprising a greater energy than the first energy level; first basis state (|0)) being different to the second basis state (|1〉);
a third energy level (106) comprising a greater energy than the second energy level (104);
the method comprising:
   applying a magnetic field (B) to the atom to:
      split the second energy level (104) into a plurality of sub-levels (108a/b/c) ;
      each sub-level of the second energy level (104) comprising a different energy to the other sub-levels (108a/b/c) of the second energy level;
   split the third energy level (106) into a plurality of sub-levels (110a/b/c); each sub-level of the third energy level comprising a different energy to the other sub-levels of the third energy level (106);
   applying an Electro-Magnetic, EM, radiation (105) to the atom to cause a transition (109) from:
      a first sub-level (108b) of the plurality of sub-levels (108a/b/c) of the second energy level (104); to,
      a first sub-level (110c) of the sub-levels (110a/b/c) of the third energy level (106);
wherein:
   the first sub-level (108b) of the second energy level (104) is associated with a first orbital angular momentum (MOM2);
   the first sub-level (110c) of the third energy level (106) is associated with a second orbital angular momentum (MOM3) that is different to the first orbital angular momentum (MOM2);
   the atom decays (112) from:
      the first sub-level (110c) of the third energy level (106); to,
      a second sub-level (108c) of the of the plurality of sub-levels of the second energy level (104); the second sub-level is associated with a third orbital angular momentum that is different to the first orbital angular momentum (MOM2);
   the second sub-level (108c) of the second energy level (104):
      at least partially represents the second basis state (|1〉); and,
      comprises either:
         a minimum energy (108a) of the sub-levels (108a/b/c) of the second energy level (104); or,
         a maximum energy (108c) of the sub-levels (108a/b/c) of the second energy level (104).

The first aspect may be adapted according to any teaching herein, including but not limited to any one or more of the following options.

Optionally the first energy level is a ground state.

Optionally, the second energy level is a ground state.

Optionally, the first energy level is an excited state.

Optionally, the second energy level is an excited state.

Optionally, the second orbital angular momentum is the same absolute value of orbital angular momentum as the third orbital angular momentum.

Optionally, the second orbital angular momentum is a different absolute value of orbital angular momentum as the third orbital angular momentum.

Optionally, the first energy level (102) and the second energy level (104) have a common principal quantum number 'n'.

Optionally the third energy level (106) has a different principal quantum number to the first energy level (102).

Optionally the third energy level (106) has a different principal quantum number to the second energy level (104).

Optionally, the first energy level (102) has a quantum number, F, of 1.

Optionally, the second energy level (104) has a quantum number, F, of 2.

Optionally, the third energy level (106) has a quantum number, F, of 2.

Optionally, the first, second and third orbital angular momentum corresponds to a component of the orbital angular momentum that lies along a given, common, axis.

Optionally, the first, second and third orbital angular momentum correspond respective values of the orbital magnetic quantum number m_{F}.

Optionally, the first sub-level (110c) of the third energy level (106) has a different value of m_{F} to the first sub-level (108b) of the second energy level (104).

Optionally, the value of m_{F} of the first sub-level (110c) of the third energy level (106) is different to the value of m_{F} of the first sub-level (108b) of the second energy level (104), by a difference of absolute value 1.

Optionally, the value of m_{F} of the first sub-level (110c) of the third energy level (106) is different to the value of m_{F} of the first sub-level (108b) of the second energy level (104), by a difference of +1.

Optionally, the value of m_{F} of the first sub-level (110c) of the third energy level (106) is +2.

Optionally, the value of m_{F} of the second sub-level (108c) of the second energy level (104) is +2.

Optionally, the value of m_{F} of the first sub-level (108b) of the second energy level (104) is +1.

Optionally, the magnetic field splits the first energy level (102) into a plurality of sub-levels (114a/b/c); each sub-level of the first energy level (102) comprising a different energy to the other sub-levels (114a/b/c) of the first energy level.

Optionally, the first basis state (|0〉) is at least partially encoded on one of either:
a) a minimum energy level (114c) of the sub-levels (114a/b/c) of the first energy level (102); or,
b) a maximum energy level (114a) of the sub-levels (114a/b/c) of the first energy level (102). Optionally, the first basis state (|0〉) is fully encoded into the said one energy level.

Optionally the first basis state (|0〉) and second basis state (|1〉) are encoded in respective energy levels that differ in value of orbital magnetic quantum number, m_{F}, by |1|.

Optionally the second basis state (|1〉) is encoded in an energy level that has an m_{F} value greater than that of the energy level encoding the first basis state (|0〉).

Optionally the second basis state (|1>) is encoded in an energy level that has an m_{F} value less than that of the energy level encoding the first basis state (|0〉).

Optionally the second basis state (|1>) is encoded in a Zeeman stretched state.

Optionally the first basis state (|0〉) is encoded in a Zeeman stretched state.

Optionally, the EM radiation is circularly polarised.

Optionally the EM radiation is left circularly polarised.

Optionally the EM radiation is right circularly polarised.

Optionally, the EM radiation is a pulse of EM radiation.

Optionally, the method inputs a plurality of time successive EM radiation pulses.

Optionally, the method interleaves a plurality of the EM radiation pulses with a plurality of further EM radiation pulses.

Optionally, the method may input further EM radiation for transitioning the atom from the first energy level (102) to a higher energy level.

Optionally the further EM radiation is for transitioning the atom from the first energy level (102) to the second energy level (104).

Optionally, the further EM radiation is circularly polarised.

Optionally the further EM radiation is left circularly polarised.

Optionally the further EM radiation is right circularly polarised.

Optionally, the further EM radiation is a pulse of EM radiation.

Optionally the further EM radiation comprises a different central wavelength to the EM radiation.

Optionally the quantum system is a quantum computer.

Optionally the quantum system is a neutral atom quantum computer.

Optionally, the neutral atom quantum computer comprises a plurality of spatially separated atoms.

Optionally, the method is applied to a plurality of atoms.

Optionally the atom comprises an alkali-metal atom.

Optionally, the atom is a rubidium atom.

Optionally, the method comprises inputting one or more EM radiation pulses for performing an operation on the atom. The method may be for performing an operation on a qubit. The method may be for performing an operation on an atom representing a qubit. The method may set one or both basis states and then perform one or more operations, such as but not limited to a single and/or multiple qubit gates.

Optionally, the operation is a quantum computing gate.

Optionally, the gate is a single qubit gate.

Optionally, the EM radiation comprises at least two EM radiation pulses for performing a Raman transition between a respective sublevel of each of the first (102) and second (104) energy levels.

Optionally the EM pulses for the Raman transition comprise a circularly polarised pulse and a further pulse. The further pulse may be a linearly polarised pulse.

Optionally, the gate is a two-qubit gate.

Optionally, the method comprising transitioning the atom to a Rydberg energy level.

Optionally, the method comprises transitioning the atom to a Rydberg energy level using a two-photon absorption process.

Optionally, the two-photon absorption process uses a Zeeman stretched intermediate energy level.

Optionally the one or more EM radiation pulses for performing an operation on the atom comprises:
a first EM radiation pulse for driving an off-resonance transition of the atom from the energy level encoding the second basis state (|1>) to an intermediate energy level;
   and,
a second EM radiation pulse for driving an off-resonance transition of the atom from the intermediate energy level to a Rydberg energy level.

Optionally, any one or more of the EM radiation pulses are circularly polarised.

Optionally, any one or more of the EM radiation pulses is left circularly polarised.

Optionally, any one or more of the EM radiation pulses are right circularly polarised.

Optionally, any one or more of the EM radiation pulses are linearly polarised.

Optionally, the EM radiation pulses comprise a different central wavelength to the EM radiation for setting the atom in the second basis state |1>.

There is further presented, as a second aspect, an apparatus for setting a basis state of a qubit of a quantum system; the quantum system comprising an atom for representing the qubit, wherein the atom comprises:
a first energy level (102) associated with a first basis state (|0〉) of the qubit; the first energy level (102) being a hyperfine energy level;
a second energy level (104) associated with a second basis state (|1〉) of the qubit;
the second energy level (104) being a hyperfine energy level and comprising a greater energy than the first energy level; first basis state (|0〉) being different to the second basis state (|1〉);
a third energy level (106) comprising a greater energy than the second energy level (104);
the apparatus comprising:
I) a magnetic field generator for applying a magnetic field (B) to the atom to:
   split the second energy level (104) into a plurality of sub-levels (108a/b/c) ; each sub-level of the second energy level (104) comprising a different energy to the other sub-levels (108a/b/c) of the second energy level;
   split the third energy level (106) into a plurality of sub-levels (110a/b/c); each sub-level of the third energy level comprising a different energy to the other sub-levels of the third energy level (106);
II) one or more Electromagnetic, EM, radiation sources for applying an EM, radiation (105) to the atom to cause a transition (109) from:
   a first sub-level (108b) of the plurality of sub-levels (108a/b/c) of the second energy level (104); to,
   a first sub-level (110c) of the sub-levels (110a/b/c) of the third energy level (106);
   wherein:
   the first sub-level (108b) of the second energy level (104) is associated with a first orbital angular momentum (MOM2);
   the first sub-level (110c) of the third energy level (106) is associated with a second orbital angular momentum (MOM3) that is different to the first orbital angular momentum (MOM2);
   the atom decays (112) from:
      the first sub-level (110c) of the third energy level (106); to,
      a second sub-level (108c) of the of the plurality of sub-levels of the second energy level (104); the second sub-level is associated with a third orbital angular momentum that is different to the first orbital angular momentum (MOM2);
   the second sub-level (108c) of the second energy level (104):
      at least partially represents the second basis state (|1〉); and,
      comprises either:
         a minimum energy (108a) of the sub-levels (108a/b/c) of the second energy level (104); or,
         a maximum energy (108c) of the sub-levels (108a/b/c) of the second energy level (104).

The apparatus may be adapted according to any teaching herein, including but not limited to, any one or more of the options presented above for the first aspect and/or any one or more of the options presented underneath.

The apparatus may comprise the quantum system.

The apparatus may comprise further devices, equipment such as but not limited to: further EM sources; electronic controllers, classical computers for generating and outputting electronic control signals for operating the apparatus (such magnetic field generators; EM sources and any devices used to establish and/or maintain the quantum system).

### Brief description of the drawings

Figures 1a shows a Bloch sphere;
Figures 1b and 1c show errors represented on the Bloch sphere;
Figure 1d shows energy levels of a Raman transition;
Figure 2 shows an energy level diagram encoding basis states of the prior art;
Figure 3a-3f shows example of schematic diagrams including an energy level diagram for encoding a basis state together with representations of external stimuli;
Figure 4 shows qubit positions for an error correcting surface code;
Figure 5a shows qubit positions for an error correcting repetition code;
Figure 5b shows a quantum circuit for repetition encoding a qubit;
Figure 5c shows a quantum circuit for performing error detection for the qubit encoded by figure 5b;
Figure 6 shows an example of an energy level diagram for performing single and multiple qubit gates;
Figure 7 shows a schematic drawing of an example of a neutral atom quantum computer.

### Detailed description

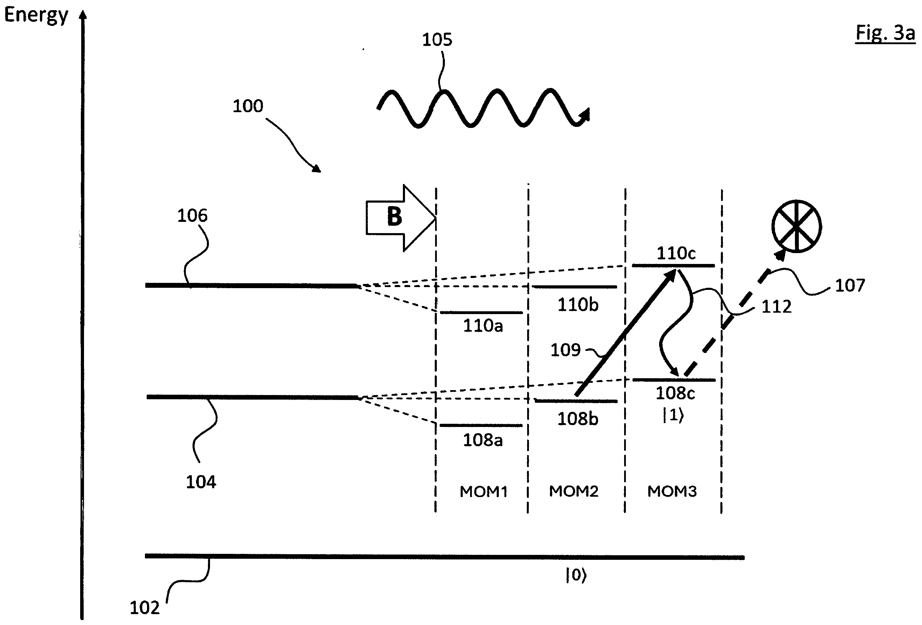

An example of the method is now described with respect to figure 3a. The method is for setting at least one basis state of a qubit of a quantum system. Accordingly, there is also presented a system for setting at least one basis state of a qubit of a quantum system. The system may be any of: a quantum computer, part of a quantum computer; a system used by a quantum computer; or another system such as a sensor. The system may comprise a magnet and an EM source for outputting the EM radiation. The method may be used for preparing the atom for use in a further interaction. The further interaction may be part of a quantum computation or other process such as a sensing application.

The quantum system comprises an atom for representing the qubit. The method and system may be used to set the basis state for a plurality of atoms in a similar manner. Figure 3a shows an energy level diagram of the atom that is used to illustrate the method. The energy of the atom increases as indicated by the arrow labelled 'Energy'. The atom comprises a first, ground state, energy level 102. A non-ground state energy level may be used for other implementations. This first energy level 102 is used by the method for encoding a first basis state |0〉 of the qubit. The first energy level 102 is a hyperfine energy level.

The atom also comprises a second energy level 104. The second energy level 104 may be a ground state or an excited state. This second energy level 104 is used by the method for encoding a second basis state |1〉 of the qubit. The second energy level 104 is a hyperfine energy level. The second energy level 104 comprises a greater energy than the first energy level. The terms 'first' and 'second' in this description, with respect to energy levels and sublevels are used merely to differentiate one energy level from another and do not represent an order relating to a physical parameter of the atom.

Figure 3a shows the first energy level 102 to be a single energy level, however it may be degenerate and be comprised of a plurality of energy levels in a similar manner to the second energy level 104.

The atom also comprises a third energy level 106. The third energy level 106 comprises a greater energy than the second energy level 104. The third energy level 106 comprises a greater energy than the first energy level 102.

The method applies a magnetic field 'B' (shown inside a schematic arrow) to the atom. The direction of the arrow 'B' is not intended to be representative of the direction of magnetic field lines in this figure. Typical atomic physics nomenclature has the magnetic field lines oriented along a z-axis, thus values of m_{F} discussed elsewhere herein are relating to that axis. The magnetic field B acts to split the second energy level 104 into a plurality of sub-levels 108a/b/c. Each sub-level 108a/b/c of the second energy level 104 comprises a different energy to the other sub-levels 108a/b/c of the second energy level 104. In figure 3a there are three sub-levels shown, however other numbers of sublevels may be used such as five, seven or nine sublevels, or 2N+1 sublevels where N is a positive integer. At least one sub level 108a/b/c of the second energy level 104 may comprise a higher energy than the energy of the unsplit second energy level 104. At least one sub level 108a/b/c of the second energy level 104 may comprise a lower energy than the energy of the unsplit second energy level 104. Each sub level corresponds to a different value of m_{F} wherein m_{F} = any of 0 or +/an integer number up to N. For example, m_{F} may be any of, but not limited to: 0, +1, +2, +3, - 1, -2, -3.

Furthermore, a magnetic field 'B' splits the third energy level 106 into a plurality of sub-levels 110a/b/c. Each sub-level of the third energy level comprises a different energy to the other sub-levels of the third energy level 106. In figure 3a there are three sub-levels shown, however other numbers of sublevels may be used such as five, seven or nine sublevels, or 2N+1 sublevels where N is a positive integer. Similar energy level relationships described above for the second energy level 104, may exist between the split and unsplit third energy level 106. Each sub level corresponds to a different value of m_{F} wherein m_{F} = any of 0 or +/an integer number up to N. For example, m_{F} = may be any of, but not limited to: 0, +1, +2, +3, -1, -2, -3. The number of sublevels for the second 104 and third 106 energy level may be the same of may be different.

The splitting of the second energy level and third energy level into sublevels is via the Zeeman effect. The splitting of the second 104, third 106 and optionally first 102 energy levels occur simultaneously.

At the same time as applying the magnetic field B, or after initially applying the magnetic field, the method then applies Electro-Magnetic, EM, radiation 105 to the atom. The EM radiation 105 is applied whilst the magnetic field is being applied to the atom. The application of the EM radiation 105 causes an energy level transition 109 in the atom. The transition 109 is a transition from a first sub-level 108b of the plurality of sub-levels 108a/b/c of the second energy level 104. The transition is to a first sub-level of the sub-levels 110a/b/c of the third energy level 106. The transition occurs via a single or multiple-photon absorption of the EM radiation. The EM radiation 105 provided for a multi-photon absorption process for a single transition may come from the same or different EM radiation sources and may be the same or different wavelengths and may be the same or different polarisation state. EM sources may include a laser, or another source such as a VCSEL or LED.

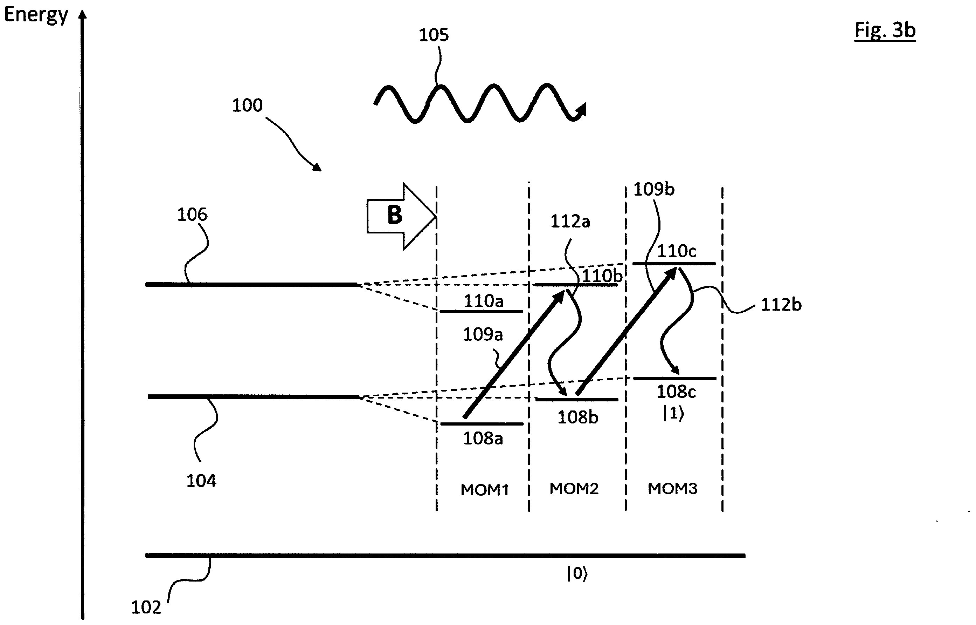

The first sublevel of the second energy level 104, in figure 3a, is shown as sub level 108b and the first sublevel of the third energy level 106 is shown as 110c, however other sublevels may be used. In particular, the method may induce a plurality of successive transitions from sublevels of the second energy level 104 to sublevels of the third energy level 106. These are discussed underneath in variations of the method as shown in figures 3b-3f.

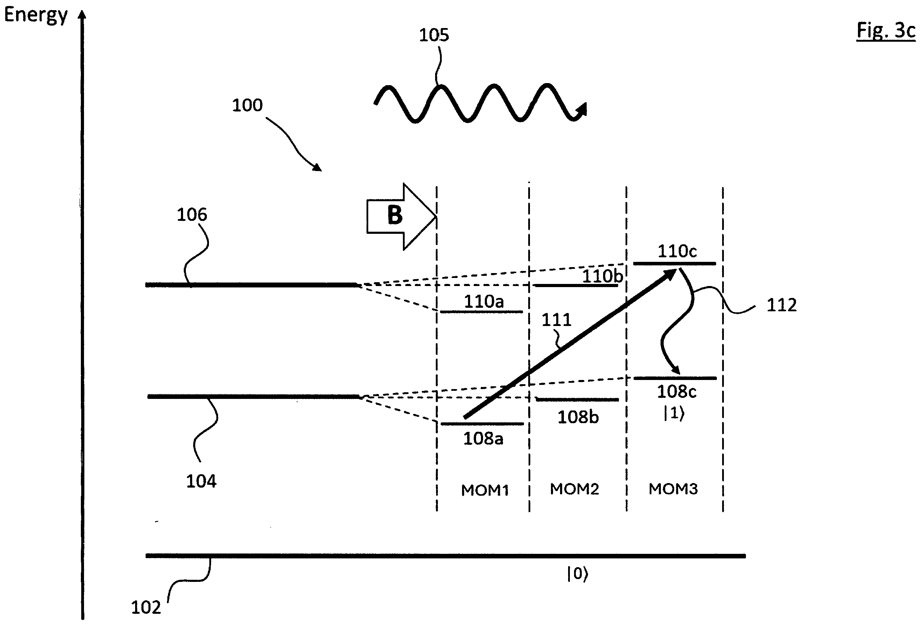

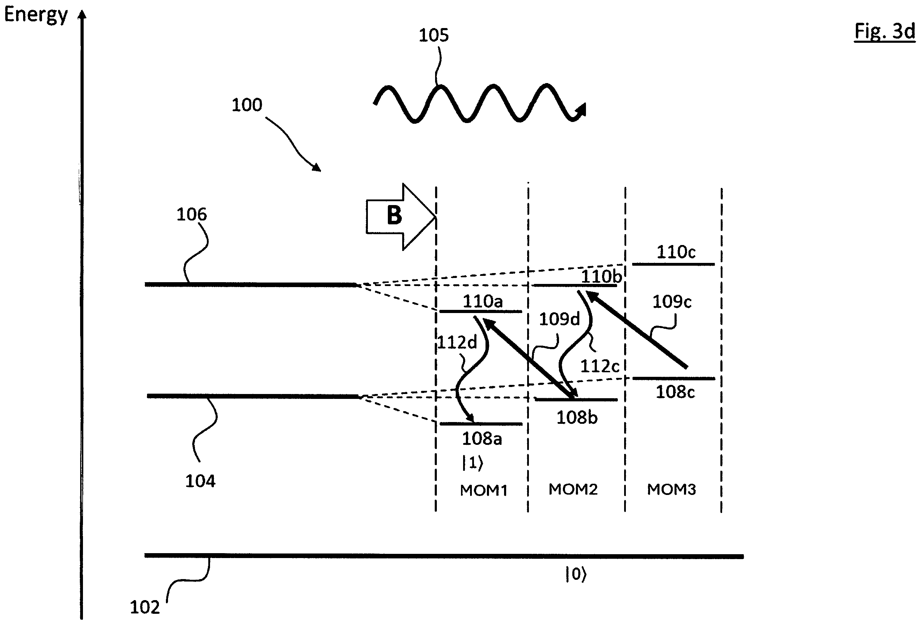

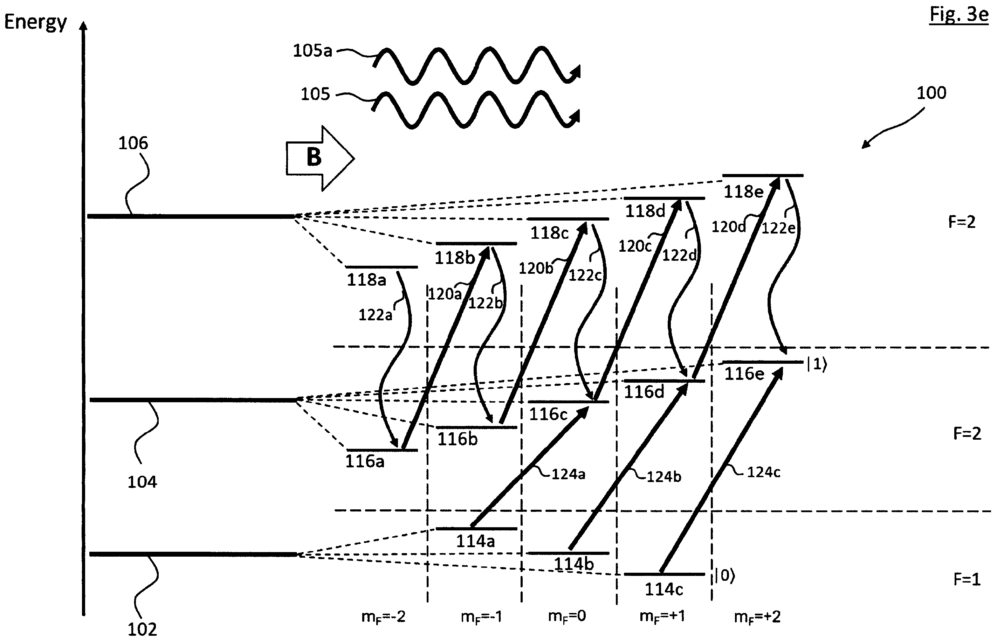

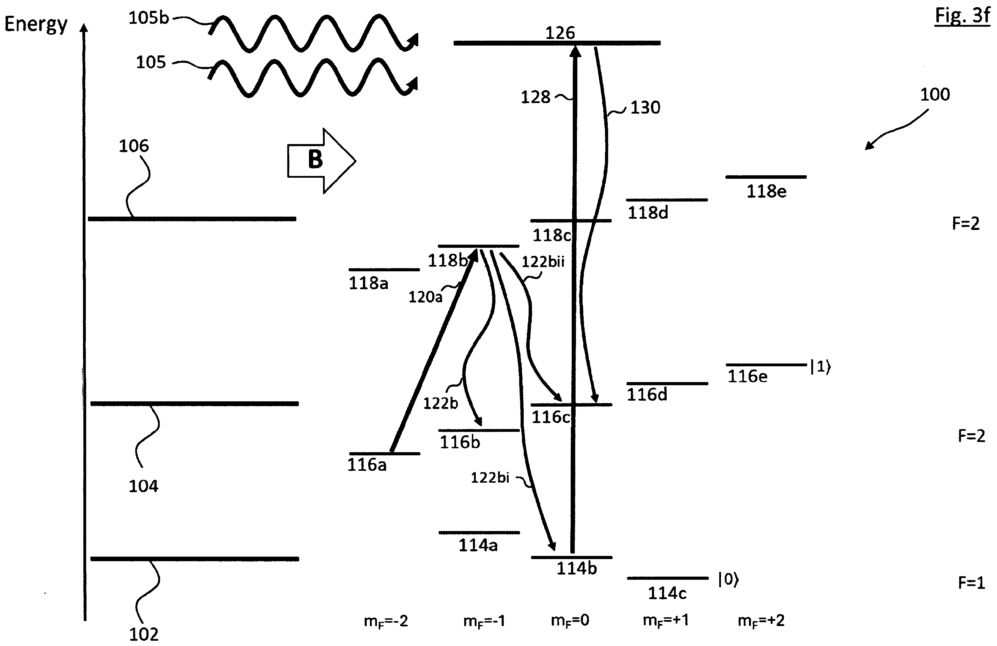

Turning back to the illustrative example of figure 3a. The first sub-level 108b of the second energy level 104 is associated with a first orbital angular momentum (labelled MOM2). The first sub-level 110c of the third energy level 106 is associated with a second orbital angular momentum (labelled MOM3) that is different to the first orbital angular momentum MOM2. The sub-levels 108a and 110a in figure 3a are associated with the same orbital angular momentum MOM1 that is different to orbital angular momentums MOM2 and MOM3. In the example of figure 3, MOM1 may be associated with m_{F}=-1; MOM2 may be associated with m_{F}=0; MOM3 may be associated with m_{F}=+1.

After the atom transitions 109, the atom then decays 112 to a lower energy level of the atom. The term 'decay' herein refers to the change in energy state of the atom from a higher energy state to a lower energy state typically though the process of spontaneous emission, or in some cases stimulated emission. Different energy levels may be decayed to.

The method shown in figure 3a uses a decay 112 from the first sub-level 110c of the third energy level 106 to a second sub-level of the of the plurality of sub-levels of the second energy level 104. In figure 3a, this decay is shown to go to the sub energy level 108c, which incurs no change in orbital angular momentum as 108c has orbital angular momentum MOM3, however other decays may be used including those to lower energies and different orbital angular momentum values or values of m_{F}. The second sub-level is, however, associated with a third orbital angular momentum that is different to the first orbital angular momentum MOM2. Thus, the process of transition 109 and subsequent decay 112 may be thought of as a process of the atom stepping up an energy level stair. In some other examples the process may be stepping down a set of energy level stairs.

Turning again back to figure 3a. The second sub-level 108c of the second energy level 104 at least partially represents the second basis state |1〉. In some examples the second sub-level 108c of the second energy level 104 may fully represent the entirety of the second basis state |1〉. Furthermore, the second sub-level 108c is either one of a minimum energy (108a) of the second sub-levels 108a/b/c or a maximum energy 108c of the second level sub-levels 108a/b/c. In the example of figure 3a, the second sublevel is the maximum energy level 108c.

The atom may therefore start, before the application of the method, from a first set of energy levels and, after the method, end in a second, different set of energy levels that encode the basis states. At least one energy level of the second set is different to any of the energy levels encoding the basis states of the first set. The set of basis states comprises a first basis state (|0〉) and, a different, second basis state (|1〉).

The method has several advantages.

Firstly, related to radiative transitions (decays) to lower energy levels. A radiative decay, via spontaneous emission obeys selection rules. In particular, for an Alkali metal atom with a single outer electron, the selection rules for radiative transitions for a single photon (absorbed or emitted) comprise: the change in principal quantum number, Δn, = anything; the change in orbital angular momentum quantum number Δl = ±1, the change in Δm_{F} = 0, ±1.

Lower energy levels such as the first energy level 102 typically have lower F values, particularly if the first and second energy levels represent hyperfine states of the same principal 'n' and orbital angular momentum 'I' quantum numbers. The lower F value entails a smaller range of m_{F} values. Therefore, when in either the maximum energy sublevel or minimum sublevel of the second energy level, the atom in the |1> state, has fewer options of other energy levels to decay to than when the atom is in a different energy level such as second energy level sublevel 108b. This in turn means that if the atom were to undesirably decay, from the |1〉 energy level, it can be more easily compensated for because of the limited range of decay options. A stretched state is the highest or lowest Zeeman sub-level of a given energy state.

In figure 3a, a dashed arrow 107 is shown. This arrow 107 shows that, given the same EM radiation 105 that promotes the atom from a sub-level of the second energy level 104 to a sublevel of the third energy level 106, the atom does not promote the atom to a higher energy level once in the stretched state sublevel. This may allow for the EM radiation to be input to the atom (or atoms if multiple atoms are used by the method) and only be able to promote the atom up to a certain stretched state, which in figure 3a is energy sub-level 108c. Thus, the EM radiation 105 may be input for a duration of time longer than the time it takes for a single transition 109 and subsequent decay 112, but the atom only being able to attain the stretched energy state level.

The method allows for biasing of qubit errors by at least putting the second basis state, |1〉, in a stretched state. The stretched state being either the minimum or maximum energy level of the second level 104. The method may be used to excite the atom to a Rydberg state after setting the atoms |1> state to the stretched state. Rydberg transitions may be facilitated by inputting EM radiation to excite the atom from the second basis state, |1〉, to a Rydberg state. This may be accomplished using a single photon of EM radiation or with multiple photons. Where multiple photons are used, the excitation to the Rydberg state may be via an intermediate state energy level between the second basis state, |1〉, and the Rydberg state. For applications in quantum computing, in particular when promoting the atom to a Rydberg energy level using a stretched intermediate state, the method allows for a minimisation of errors because of the limited spontaneous emission options available to the atom when in the higher energy states such as the Rydberg state and intermediate states between the |1> state and the Rydberg state.

By having the transition start from a stretched state, the main decay channel from both the intermediate and Rydberg states ends the atom back in the |1〉 state. The method may therefore bias the errors to be Z Pauli errors. The methods may therefore limit the types of error a qubit can encounter, hence entail a simpler a QEC process. The simpler the QEC process, the fewer the number of qubits a quantum computer may require to provide a fault tolerant quantum computer. Thus, having a "biased qubit", i.e. a qubit for which one Pauli error channel is much larger than the other errors, allows for using a more resource efficient quantum error correction (QEC) code, hence enhances the performances of the architecture in terms of qubit savings.

Figures 3b-3f now show different further examples of how the method may be implemented.

Figure 3b shows an energy level diagram similar to that of figure 3a wherein like numerals represent like features. In figure 3b the method uses multiple transition and multiple decays. In this example there are two transitions 109a, 109b and two decays 112a, 112b. The atom starts at the sub energy level 108a of the second energy level 104. The first transition 109a absorbs one or more photons of the EM radiation to increase the atoms energy level to the energy of sublevel 110b of third energy level 106. The subsequent decay 112a decreases the atoms energy level to sublevel 108b of the second energy level. The transition 109b follows after, in time, from the decay 112a and increases the atoms energy to the sub energy level 110c of the third energy level 106. The subsequent decay 112b decreases the atoms energy level to sublevel 108c of the second energy level.

Thus, the method may give rise to multiple transitions and multiple decays wherein a decay occurs after each transition. In other words, the decays and transitions are interleaved in time. This stair-like process may be referred to as optical pumping. Each transition in this example changes the energy level of the atom by increasing m_{F} by +1. Each successive transition may increase the atom to a successively higher sublevel of the third energy level 106. Each decay after each successive transition may decrease the energy of the atom to a successively higher sublevel of the second energy level 104. In other words, the energy sublevel that the atom decays to may be a higher energy level than the previous energy sublevel that the atom decayed to.

Other examples herein, discussed below, show each transition changing the energy level of the atom by decreasing m_{F} by -1. Increasing or decreasing orbital angular momentum may be achieved by using particular polarisation states of the EM radiation. For example, a first circular polarisation state may be used to change the atom's energy state m_{F} by -1 whilst a second, different, circular polarisation state may be used to change the atom's energy state m_{F} by +1. The circular polarisation states may be left or right circular polarisations. The wavelength of the EM radiation is preferably at resonance but may also be just off resonance.

Figure 3c shows an example similar to that of figure 3a except that a single transition 111 excites the atom from sublevel 108a of the second energy level 104 to sublevel 110c of the third energy level 104. Such a circumstance may occur with the correct EM radiation wavelength and polarisation. If MOM1-MOM3 represent m_{F} by -1, 0 and +1 respectively, then the transition 111 in figure 3c induces a change in m_{F} from -1 to +1. This may arise from the transition being a two-photon absorption process and the EM radiation being circularly polarised.

Figure 3d shows a further example similar to that of figure 3b wherein instead of the method increasing the atomic energy level in a stepwise manner to represent the basis state |1〉 by the maximum sub energy level 108c of the second energy level 104, the method decreases the atomic energy level in a stepwise manner to represent the basis state |1〉 by the minimum sub energy level 108a of the second energy level 104. In other words, the EM radiation is absorbed to transition the atom from a starting energy level of 108c to the sublevel 110b of the third energy level 106. This transition includes a change in orbital angular momentum such that the starting sublevel has orbital angular momentum MOM3 whilst the finishing sublevel, of this transition, has orbital angular momentum MOM2. This could be, for example, a change in m_{F} from +1 to 0. The subsequent decay 112c of the atom from level 110b puts the atom at sublevel 108b of the second energy level 104. This decay 112c incurs no change in orbital angular momentum. Following the decay 112c, EM radiation is then further absorbed to transition the atom from sublevel 108b to sublevel 110a of the third energy level 106. This transition includes a change in orbital angular momentum such that the starting sublevel has orbital angular momentum MOM2 whilst the finishing sublevel, of this transition, has orbital angular momentum MOM1. This could be, for example, a change in m_{F} from 0 to -1. The following decay 112d of the atom from level 110a puts the atom at sublevel 108a of the second energy level 104. This decay 112d incurs no change in orbital angular momentum. The final sublevel of this process, that the atom ends up in is 108a, which is used to represent basis state |1〉.

Figure 3e shows an energy level diagram similar to figure 3b wherein like references in the figure denote like features. In this figure the first 102, second 104 and third 106 energy levels are shown split into sublevels via the Zeeman effect by application of the magnetic field B. In this example all sublevels of second energy level 104 have greater energy than any of the sublevels of the first energy level 102. In this example all sublevels of third energy level 106 have greater energy than any of the sublevels of the second energy level 104. It is to be appreciated that in some atomic systems, and/or for some magnetic field strengths, some sublevels of an energy level with a notionally lower energy level may have a higher energy than some sublevels of an energy level with a notionally higher energy. In other words, in some circumstances a sublevel such as 114a may have a higher energy than sublevel 116a.

In figure 3e, the first energy level 102 is an F=1 level and is split into three sublevels 114a/b/c, via the application of the magnetic field 'B'. Here, F is the quantum number representing the coupling of the net orbital angular momentum and the net nuclear spin. Sublevel 114a is associated with m_{F}=-1. Sublevel 114b is associated with m_{F}=0 and has a lower energy than sublevel 114a. Sublevel 114c is associated with m_{F}=+1 and has a lower energy than sublevel 114b.

The second energy level 104 is an F=2 level and is split into five sublevels 116a/b/c/d/e, via the application of the magnetic field 'B'. Sublevel 116a is associated with m_{F}=-2. Sublevel 116b is associated with m_{F}=-1 and has a higher energy than sublevel 114a. Sublevel 116c is associated with m_{F}=0 and has a higher energy than sublevel 116b. Sublevel 116d is associated with m_{F}=+1 and has a higher energy than sublevel 116c. Sublevel 116e is associated with m_{F}=+2 and has a higher energy than sublevel 116d.

The third energy level 106 is an F=2 level and is split into five sublevels 118a/b/c/d/e, via the application of the magnetic field 'B'. Sublevel 118a is associated with m_{F}=-2. Sublevel 118b is associated with m_{F}=-1 and has a higher energy than sublevel 118a. Sublevel 118c is associated with m_{F}=0 and has a higher energy than sublevel 118b. Sublevel 118d is associated with m_{F}=+1 and has a higher energy than sublevel 118c. Sublevel 118e is associated with m_{F}=+2 and has a higher energy than sublevel 118d.

In this example shown in figure 3e, the method applies a plurality of EM radiation signals successively in time. Each EM radiation signal may be an EM pulse. An EM pulse may start to be incident upon the atom during, of after, a previous EM pulse has finished being incident upon the atom. In this example each EM pulse starts to be incident upon the atom after a previous pulse of the plurality of EM pulses stops being incident upon the atom.

For purposes of this example the EM radiation signal shall be referred to as 'EM pulses'. In this example there are two categories of EM pulses. The first category are for transitioning the atom from a sublevel 114a,b,c of the first energy level 102, to a sublevel 116c,d,e, of the second energy level 104. This EM radiation is represented, in the figure by curved line 105a. The second category are for transitioning the atom from a sublevel 116a,b,c,d of the second energy level 104, to a sublevel 118b,c,d,e, of the third energy level 106. This EM radiation is represented, in the figure by curved line 105. All of the EM pulses, in both categories, in this example induce a transition to an energy sublevel that has a different m_{F} value than the energy sublevel is transitioned from. In this example, each EM pulse induces a shift in m_{F} of +1. Thus, the transition from sublevel 114b to 116d is a change in m_{F} of +1 transitioning the atom from a sublevel with m_{F} =0 to a sublevel of m_{F} =+1.

In more detail, the first category comprises three transitions 124a,b,c. Transition 124a excites the atom from sublevel 114a (m_{F} =-1) of first energy level 102, to sublevel 116c (m_{F} =0) of second energy level 104. Transition 124b excites the atom from sublevel 114b (m_{F} =0) of first energy level 102, to sublevel 116d (m_{F} =+1) of second energy level 104. Transition 124c excites the atom from sublevel 114c (m_{F} =+1) of first energy level 102, to sublevel 116e (m_{F} =+2) of second energy level 104. Transitions here are shown increasing m_{F} by an absolute value of '1', this equates to σ+ transitions. Other transitions may be used in other implementations of this ladder-like scheme, and optionally other examples herein, such as any of: one or more σ- transitions (decreasing m_{F} by an absolute value of '1'); one or more π transitions (not changing, in the transition, m_{F}, i.e. a change in m_{F} of 0.

The second category comprises four transitions 120a,b,c,d. Transition 120a excites the atom from sublevel 116a (m_{F} =-2) of second energy level 104, to sublevel 118b (m_{F} =-1) of second energy level 106. This may be a σ transition, such as a σ⁺ transition. Transition 120b excites the atom from sublevel 116b (m_{F} =-1) of second energy level 104, to sublevel 118c (m_{F} =0) of second energy level 106. This may be a σ transition, such as a σ⁺ transition. Transition 120c excites the atom from sublevel 116c (m_{F} =0) of second energy level 104, to sublevel 118d (m_{F} =+1) of second energy level 106. This may be a σ transition, such as a σ⁺ transition. Transition 120d excites the atom from sublevel 116d (m_{F} =+1) of second energy level 104, to sublevel 118e (m_{F} =+2) of second energy level 106. This may be a σ transition, such as a σ⁺ transition.

When the atom is in any of the sublevels of the third energy level 106, for example being excited by one of the transitions 120a-d, it may decay by emitting one or more photons. The atom may decay to a lower energy sublevel of the second energy level 104. The decay may be to an energy level with the same value of m_{F}, or a different value obeying selection rules. In figure 3e, each decay 122a,b,c,d,e shown is associated with a different starting sublevel and a different end sublevel. Furthermore, each decay 122a,b,c,d,e incurs no change in m_{F}.

In more detail, decay 122a drops the atoms energy level from sublevel 118a (m_{F} =-2) of the third energy level 106, to sublevel 116a (m_{F} =-2) of the second energy level 104. The atom may initially be in sublevel 118a when the method is applied; alternatively, the method may use EM radiation to transition the atom to this sublevel 118a. Decay 122b drops the atoms energy level from sublevel 118b (m_{F} =-1) of the third energy level 106, to sublevel 116b (m_{F} =-1) of the second energy level 104. Decay 122c drops the atoms energy level from sublevel 118c (m_{F} = 0) of the third energy level 106, to sublevel 116c (m_{F} = 0) of the second energy level 104. Decay 122d drops the atoms energy level from sublevel 118d (m_{F} = +1) of the third energy level 106, to sublevel 116d (m_{F} = +1) of the second energy level 104. Decay 122e drops the atoms energy level from sublevel 118e (m_{F} = +2) of the third energy level 106, to sublevel 116e (m_{F} = +2) of the second energy level 104.

The transitions and/or decays described above for figure 3e therefore allow for the method to change the energy level of the atom to other energy levels in the diagram. In particular, the method may be used to transition the atom to the sublevel 116e of the second energy level 104. This sublevel 116e may be used to represent the second basis state |1〉.

Different combinations of transitions may be used by the method to get the atom into the sublevel 116e. Hence, different EM pulses may be used. The method may use a series of EM pulses. The different pulse categories may be interleaved. The whole series or at least a portion of the series may alternate between: A) an EM pulse to cause one of the transitions 124a,b,c; B) an EM pulse to cause one of the transitions 120a,b,c,d. The series may comprise any number of EM pulses, such as but not limited to: two, three, four, five, six, seven, eight, nine, ten EM pulses. For example, assuming each of the transitions 120a-d uses a σ⁺ transition EM pulse and each of the transitions 124a-c uses a π transition EM pulse, the series may be (in time): σ⁺ - π - σ⁺ - π - σ⁺ - π - σ⁺. Another alternative example is: σ⁺ - σ⁺ - π - σ⁺ - π - σ⁺ - π - σ⁺. As mentioned above, the π transition components in such sequences may be replaced by other transitions such as a σ⁺.

The EM pulses for the 120a-d transitions may use the same parameters for the EM pulse for each of the pulses in the series, or different parameters. The EM pulses for the 124a-c transitions may use the same parameters for the EM pulse for each of the pulses in the series, or different parameters. It is to be understood that the resonant wavelength for different sublevel transitions between the first 102 and second 104 energy levels may differ such that some EM pulses are on or slightly off resonance. However slightly off resonance EM pulses may still give rise to the required transition, but at a lower efficiency. The same consideration may be for the different sublevel transitions between the first 102 and second 104 energy levels. Thus, the wavelength chosen may be, for example, an average wavelength required for the set of transitions of the same category. Parameters of the EM pulse may be polarisation, direction of propagation, wavelength, amplitude, Rabi frequency Ω, detuning Δ. Having such an EM pulse sequence may be useful for applications where we do not know the initial energy state of the atom, but we want to ensure it is pumped to sublevel 116e. The EM pulse sequence helps to ensure this because if it is at any of the energy levels in figure 3e, it is pushed (or 'pumped') towards sublevel 116e. Once in sublevel 116e, the atom in figure 3e is in a stretched state and has fewer decay options than other energy states. In particular, if the basis state |0〉 is encoded in a sublevel of a (lower) energy level with fewer sublevels than the energy level encoding the basis state |1〉, then the stretched sublevel encoding the basis state |1〉 has no direct (Δm_{F}=0) decay path, with no change in m_{F}, to the sublevels of the lower energy level encoding the basis state |0〉. In other words, if the 'F' value of the energy level encoding the basis state |0〉 is less than the 'F' value of the energy level encoding the basis state |1〉, then no direct emission transition (not changing in m_{F}) is possible from the stretched state encoding the basis state |1〉 to the energy level encoding the basis state |0〉.

Figure 3f shows a further example of the method. Figure 3f is similar to figure 3e with like numerals representing like features. In the example of figure 3f, not all transitions of figure 3e are shown, however other transitions are depicted. If the atom is promoted from sub level 116a to 118b via EM radiation 105, then it may subsequently decay into different states. In the example of figure 3f, the atom may be a Rubidium atom and the EM radiation 105 causing the transition 120a may be 795nm and be a σ⁺ transition. As per figure 3e, the atom may decay via decay path 122b and emit a photon without changing to a state having a different value of m_{F}. Alternatively, the atom may decay via a different path 122bi, to a lower energy level of the first energy level 102. In figure 3f, this is shown as sublevel 114b, however any of the sub-levels of the first energy level 102 may be decayed to if selection rules are obeyed. This decay is shown in figure 3f with an increase in m_{F} of +1, however of decays to other levels with different m_{F} values may be possible if selection rules are obeyed. Alternatively, the atom may decay via a different path 122bii, to a different sublevel 116c that has a different value of m_{F} than the level the atom decayed from. This is shown as decaying to a level 116c with an increase in m_{F} of +1, however of decays to other levels with different m_{F} values may be possible if selection rules are obeyed. If the atom decays to any of the sublevels of the second energy level 104, then the EM radiation 105 may continue to push the atom up to an energy level of the stretched state 116e. If the atom decays to any of the sublevels of the first energy level 104, then further EM radiation 105b may be used to pump 128 the atom up to an energy level 126 higher than that of the second energy level 104, potentially higher than the third energy level 106. The EM radiation 105 and further EM radiation 105b may be input simultaneously to the atom(s), or at least partially overlap in time. Alternatively, one of the EM radiation 105, 105b may be input after the other stops being input. Once in this higher energy level 128, the atom may then decay 130 to a sublevel of the second energy level 104. Once in a sublevel of the second energy level, the EM radiation 105 may then continue to urge the atom towards the stretched state 116e through transitions are discussed previously. The further EM radiation 105b may be referred to as a 'repumper' and may have, for example, a wavelength of 780nm. In figure 3f: the second energy level 104 may be, for example, 5S_{1/2}; the third energy level 106 may be, for example, 5P_{1/2}; the further energy level 126 may be, for example, 5P_{3/2}. The energy levels and transitions shown in figure 3e may be applied to other examples herein.

In each of the above examples, the method prepares the atom to be in a stretched state that represents the basis state |1〉. The atom may then be acted on by further input stimuli, such as further EM radiation.

The above examples may be adapted. Features that may be adapted include any of, but not limited to: order of steps of the method; type of atom; number of atoms; types of energy levels; numbers of energy levels; energy values of energy levels; magnetic field strength and direction; Electromagnetic radiation; equipment and other hardware in the system or for giving rise to the method. EM radiation intensities may typically be between 1W/m² and 1 x10¹¹ W/m². Magnetic field may, typically be between 1G and 1000G (G, is Gauss, wherein 1 Tesla (1T) 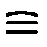 10000 G)In more detail, the features may include, but are not limited to any of the following optional adaptions.

The atom may be a neutral atom or an ion. The atom, or atoms may be the same or different type of chemical elements. Where multiple atoms are used on the system, the atoms may be of the same or a different chemical element type. The atom, or atoms may be Alkali metal atoms. The atom or atoms may have, in their unexcited ground states, their outermost electron in an s-orbital. The atom, or atoms, may be any of lithium (Li), sodium (Na), potassium (K), rubidium (Rb), caesium (Cs), and francium (Fr). The atom, or atoms may be alkaline-earth metals. The atom, or atoms may be any of the chemical elements that comprise Group 2 (IIa) of the periodic table. The atom, or atoms may be any of beryllium (Be), magnesium (Mg), calcium (Ca), strontium (Sr), barium (Ba), and radium (Ra).Alkaline earth -like species that have two valence electrons, such as Ytterbium, Erbium and Dysprosium may be used.

The quantum system may be a single atom, such as a single qubit sensor or a plurality of atoms such as an array of atoms. The atoms are preferably held (for example by an optical trap) in a fixed spatial position whilst the method is taking place.

Assuming the above described energy level relations are maintained between the any of the first 102, second 104 and third 106 energy levels, the following may apply: the energy level 102, 104, 106 may have any principle quantum number 'n', such as but not limited to 2, 3, 4, 5, 6; any of the energy levels 102, 104, 106 may have any azimuthal quantum number 'I', for example any of, but not limited to the following orbitals: s, p, d, f. Any of the first 102, second 104 and third 106 energy levels may have the range of magnetic quantum numbers m_{I}, allowed for by atomic physics; for example any of, but not limited to, the following ranges in square brackets : [0]; [-1, 0, +1]; [-2, -1, 0, +1, +2]; [-3, -2, -1, 0, +1, +2, +3]. Any of the first 102, second 104 and third 106 energy levels may have an 'F' quantum number, representing the coupling of the net orbital angular momentum and the net nuclear spin, of any of, but not limited to a value of: F=0, F=1, F=2. Any of the first 102, second 104 and third 106 energy levels may have the range of magnetic quantum numbers m_{F}, related to a hyperfine structure, allowed for by atomic physics; for example any of, but not limited to, the following ranges in square brackets : [0]; [-1, 0, +1]; [-2, -1, 0, +1, +2]; [-3, -2, -1, 0, +1, +2, +3].

The second and third energy levels may have the same principal quantum number, for example, the respective levels 5S and 5P. The first and second energy level may have different principal quantum numbers, for example, the respective levels 5S and 6S. The second and third energy levels may have the same or a different 'F' quantum number representing the coupling of the net orbital angular momentum and the net nuclear spin.

The magnetic field (B) may be applied via one or more magnets, such as a static magnet or an electro-magnet. The magnetic field gives rise to the Zeeman effect. The magnetic field may be generated using a plurality of coils to generate magnetic fields. Permanent magnets may also be used to generate a magnetic field. A combination of coils and permanent magnets is also implementable.

The applying an Electro-Magnetic may be via one or more EM sources such as but not limited to a laser. The EM radiation may be any wavelength and polarisation to provide the relevant transitions. Example of wavelengths and polarisations are provided elsewhere herein. Wavelengths may be between any of: 250nm - 2000nm; 250nm-1500nm. Optical devices such as polarisation rotators may be used to adjust the polarisation of the laser to a desired polarisation for use with the method.

The second sub-level (108c) of the second energy level (104) that at least partially represents the second basis state (|1〉) may be such that second sub-level (108c) partially represents the second basis state whilst at least one another different energy level also partially represents the second basis state (|1〉). The second sub-level (108c) of the second energy level (104) may fully represent the second basis state (|1〉). In other words, the second sub-level (108c) of the second energy level (104) may be the only energy level representing the second basis state (|1〉).

The method may be used in a quantum computation. The method may further comprise inputting further EM radiation to the atom to transition the atom from any of the first basis state |0〉, or second basis state |1〉 to a state with a higher energy level that the originating state. The higher energy level state may be a Rydberg state. The transition to the Rydberg state may be via an excitation to an intermediate energy level state.

The method may use different types of atomic transitions to promote the atom from a state with an energy level to a different higher energy level state. The method may utilise one or more Raman transitions. Figure 1d pictorially shows a Raman transition. A Raman transition occurs between a lower energy first state 20 and a higher energy second state 22 but in consideration of a third state 24 with a higher energy level than the second state 22. The third state 24 may be termed an intermediate state. Two energy level transitions 28, 30 occur simultaneously to produce a final overall transition from the first state 20 to the second state 22. One transition is from the first state 20 to an energy level 26 detuned Δ from the third state 24. Typically, the detuning is a large detuning. Typically, the detuning is to an energy level greater than the energy level of the third state 24. The other transition is from the detuned energy level 28 from the third state 24 to the second state 22. Typically, a Raman transition is stimulated by inputting, to the atom, two EM radiation beams one resonant with the transition 28, the other resonant with the transition 30. The above description is here for a Raman "lambda" scheme. It could also be that 22 is energetically above 24. This in is called a Raman "ladder" scheme. A Raman ladder may be used for any Rydberg excitations used with the method.

The method may use different types of atomic decays to change the atom's energy level to a state with a lower energy level. The decay may be to a lower energy state of the same value of m_{F} or a different value of m_{F}. For example, the decay may introduce a change in m_{F}= of any of, but not limited to: -1, 0, +1. The radiative decay may be governed by selection rules. It is noted that in certain atomic systems such as alkaline earth atoms, some excited states are "metastable" because there are no coupling to lower energy states following the selection rules. In these conditions, the relativistic effects appear more strongly and the dynamics are not governed by the selection rules anymore.

The method may apply further EM radiation to perform an operation. The operation may be a quantum computation or at least a part of a quantum computation. The operation may be a single or multi-photon transition to a higher energy level than the |1> state. The higher energy level may be a Rydberg energy level. The transition from the energy level sublevel encoding the |1> basis state to the Rydberg energy level may use an intermediate energy level, for example in a two-photon transition. The EM radiation used in the two-photon transition may be on resonance or off resonance transitions to/from the intermediate energy level. The intermediate energy level may have a plurality of sublevels split by the Zeeman effect. The transition may use a stretched sublevel of the intermediate energy level. The EM radiation promoting the atom from the |1> basis state to the intermediate energy level may comprise a polarisation state that ensures that the sublevel of the intermediate energy level used in the two-photon transition is a stretched state, for example the minimum or the maximum energy level of the Zeeman-split sublevels of the intermediate energy level. Similarly, the EM radiation used to promote the atom from the intermediate energy level to the Rydberg energy level may have a polarisation state for the atom to be promoted to a stretched state or a state adjacent to the stretched state.

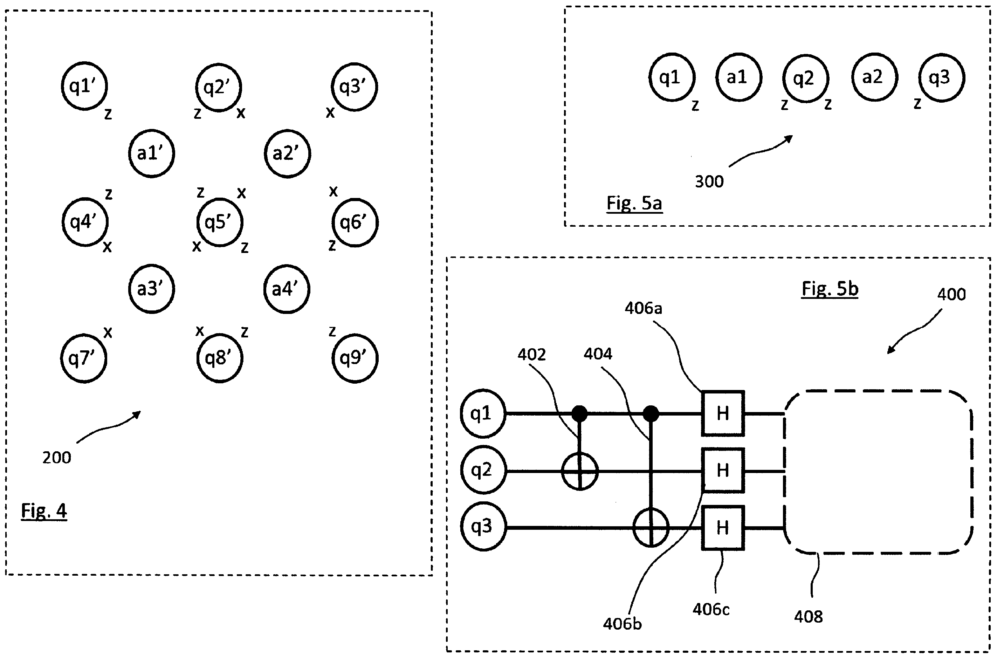

Figures 4 and 5a-c show examples of how the method may be used in quantum computations. The method may be adapted to include any of the features described in these examples; including but not limited to: coding, error detection, recovery processes; qubit numbers; qubit positions and layouts, gate types and positions within a quantum circuit; quantum circuit designs. In these example, and other examples herein it is assumed that a single atom represents a single qubit. Such an atom may be termed, for ease of reference a 'qubit atom'. Qubit-atoms may be atoms representing desired quantum information to be acted on in a quantum computation; or an ancillary qubit atom used to encode of perform error correction and recovery processes after a quantum computation. Furthermore, it is assumed in these examples that the method may be applied to multiple atoms. In other words, any one or more, preferably all, of the qubit atoms representing a logical qubit are in a stretched state. In some examples the ancillary atoms are also in a stretched state.

Figure 4 shows an example of a spatial layout 200 of atoms, about a common plane, wherein each atom represents a different qubit. The layout 200 is for surface encoding, and error detecting and recovery of, a single logical qubit represented by nine qubits q1'-q9' wherein the error detection uses four ancillary qubits a1'- a4'. The surface encoding/decoding in figure 4 is for error correcting both X and Z Pauli errors. Each of the q1'-q9' atoms are located at corner vertexes of a 2x2 square grid. The ancillary qubits a1'- a4' are located in the centre of each of the squares. For encoding the logical qubit in figure 4, the ancillary atoms a1'-a4' are typically removed or not introduced in their shown positions. Quantum information is carried by one of the qubits q1'-q', for example q1'. This example sequentially copies the quantum information from q1' to each of the other qubits q2'-q9' through a succession of CNOT quantum gates wherein each of the initially non-information carrying qubits q2'-q9' are in the |0> quantum state. For each CNOT gate applied, q1' is the control and the other qubit q2'-q9' is the target. The CNOT truth table is shown underneath in Table 1. As can be seen, if the target qubits start in state |0>, then: if the control is in the |0> state the target remains in the |0> state; if the control is |1> the target changes to the |1> state.

The encoding may also apply a Hadamard gate to each of the qubits q1'-q9' after all state copying has been achieved. Encoding typically requires the ancillary atoms to not be present in the grid region. Once encoded, the single logical qubit represented by the nine qubits q1'-q9' may be used in a quantum computation. The ancillary atoms a1'-a4' are used in an error correcting process after the quantum computation. The ancillary atoms a1'-a4' may be moved into position, for example using optical tweezers.

**Table 1: CNOT truth table**

| Control state | Target initial state | Target final state |
|---|---|---|
| 0 | 0 | 0 |
| 0 | 1 | 1 |
| 1 | 0 | 1 |
| 1 | 1 | 0 |

The 'x' and 'z' labels in figure 4 represent the set of qubits q1'-q9' that a particular ancillary qubit a1'-a4' uses for correcting a respective 'x' or 'z' Pauli error. Such a surface code may be used with a quantum computer using the method described herein. Despite the method transforming typical leakage error sources into Pauli error sources, primarily a single Pauli error source, (for example the z-Pauli error), a surface code may still be used for any residual 'x' Pauli errors in the system. A quantum circuit (not shown), with a plurality of quantum gates may be used to implement the surface code.

Figure 5a shows a further example of a spatial layout 300 of atoms wherein each atom represents a different qubit. The layout 300 is for 1 dimensional repetition encoding/decoding a single logical qubit wherein three qubits q1-q3 represent the logical qubit via a repetition code and two ancillary qubits a1, a2 are used for decoding. In this example, the method takes advantage of the biasing of the errors to a single Pauli channel, namely the 'z' Pauli error. Compared to a surface code, the line code requires less overall qubit atoms.

Figure 5b shows a quantum circuit 400 for encoding the logical qubit using three qubits q1, q2, q3. Each qubit q1, q2, q3 is represented by a different single atom prepared in a stretched state using the method described herein. The initial qubit carrying the information (α |0> + β |1> ) to be repetition encoded in q1. A first CNOT gate 402 is applied to q1 and q2 wherein q1 is the control qubit and q2 is the target qubit. After the first CNOT gate 402 is applied, a second CNOT gate 404 is applied to q1 and q3 wherein q1 is the control qubit and q3 is the target qubit. After the second CNOT gate 404 is applied, each of the qubits is applied a Hadamard gate either simultaneously or at different time. Hadamard gate 406a is applied to qubit q1. Hadamard gate 406b is applied to qubit q2. Hadamard gate 406c is applied to qubit q3. Once all Hadamard gates are applied, the logical qubit represented q1-3 is then acted upon by a set of one or more, preferably two or more qubit gates in a quantum computation 408. Figure 5b is an example of how to encode a logical qubit with a plurality of qubits, however other numbers of qubits and/or other gate operations to encode a logical qubit may be used, for example other repetition coding schemes.

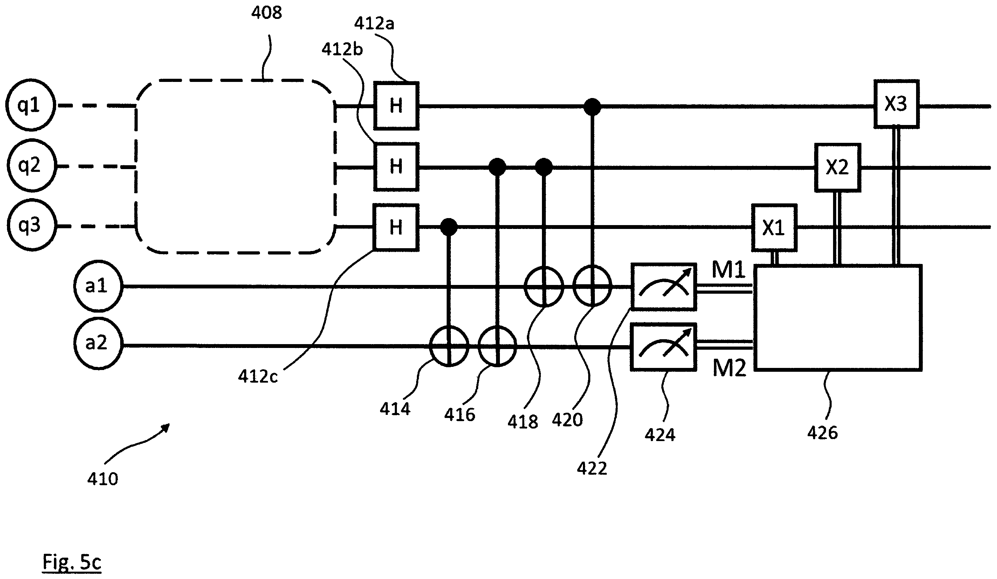

Figure 5c shows an example of an error detection and recovery quantum circuit for the three-qubit repetition encoded single logical qubit of figure 5b after it has been acted upon by the set of computation gates 408. In this example the method uses two ancillary qubit atoms a1 and a2. The quantum circuit is an example of a quantum circuit that may be used for error corrections and recovery of the logical qubit encoded in figure 5b. Other quantum circuits may be used, for example with different gates, gate configurations and circuit layouts. The quantum circuits in figures 5b and 5c are used for correcting a phase flip (Z) error via a three-qubit repetition code. The circuit is similar to an X (bit flip) error correcting circuit, but with the introduction, for each encoding qubit, of a Hadamard gate either side of the set of gates introducing the (Z) phase flip error. This comes about from the following relation HZH=X that transforms a phase flip error to a bit flip error.

After the set of one of more quantum gates 408 of the quantum computation are applied to the qubit atoms q1-3 representing the logical qubit, a different Hadamard gate is applied to each of q1-q3. Hadamard gate 412a is applied to qubit q1. Hadamard gate 412b is applied to qubit q2. Hadamard gate 412c is applied to qubit q3. On or before the application of these Hadamard gates, the ancillary qubits atoms a1 and a2 are positioned corresponding to figure 5a such that all of the qubit atoms q1-3 and a1-2 are located along a common line and spaced apart from each other. Ancillary atom a1 is positioned in between q1 and q2. Ancillary atom a2 is positioned in between q2 and q3. The positioning of qubit atoms a1 and a2 may be facilitated by a positioning system or mechanism such as an optical tweezer.

Other positions of the qubit atoms may be used such as the ancillary qubits a1, a2 not being placed along the common line that qubit atoms q1-3 are placed along.

The ancillary atoms a1, a2, each begin in the |0> state. When the ancillary qubit atoms a1 and a2 are in the desired position spatial positions relative to the qubit atoms q1-3 a plurality of CNOT gates are sequentially applied to in the quantum circuit 410. In figure 5c, four CNOT gates are applied, however other quantum circuits may use more or less CNOT gates. A first CNOT gate 414 is applied between qubit atom a2 and qubit atom q3 wherein q3 is the control and a2 is the target. After the first CNOT gate 414 is applied, a second CNOT gate 416 is applied between qubit atom a2 and qubit atom q2 wherein q2 is the control and a2 is the target. After the second CNOT gate 416 is applied, a third CNOT gate 418 is applied between qubit atom a1 and qubit atom q2 wherein q2 is the control and a1 is the target. After the third CNOT gate 418 is applied, a fourth CNOT gate 420 is applied between qubit atom a1 and qubit atom q1 wherein q1 is the control and a1 is the target.

After the fourth CNOT gate 416 is applied, ancillary qubit a1 is measured 422, and ancillary qubit a2 is measured 424. The resulting measurements signals M1 (for a1) and M2 (for a2) are input to a control logic 426.

The control logic 426 may an electronic device or system such as but not limited to a classical computer. The measurements 422, 424 may use one or more detectors. The detectors may be EM radiation detectors, for example for detecting an optical signal from the respective ancillary qubit atom a1, a2. The control logic uses the measurement signals M1, M2 to determine whether, or not, to activate a further gate in the quantum circuits. The further gates in this example are three Pauli X gates. The Pauli X gates are: X1 which is applied to qubit q3; X2 which is applied to qubit q2; X3 which is applied to qubit q1. Table 2, underneath, shows the truth table for whether a Pauli X gate is activated or not.

**Table 2: Truth table for three-qubit code, phase flip error correction**

| M2 | M1 | Pauli X Gates activated |
|---|---|---|
| 0 | 0 | None |
| 1 | 0 | X1 |
| 1 | 1 | X2 |
| 0 | 1 | X3 |

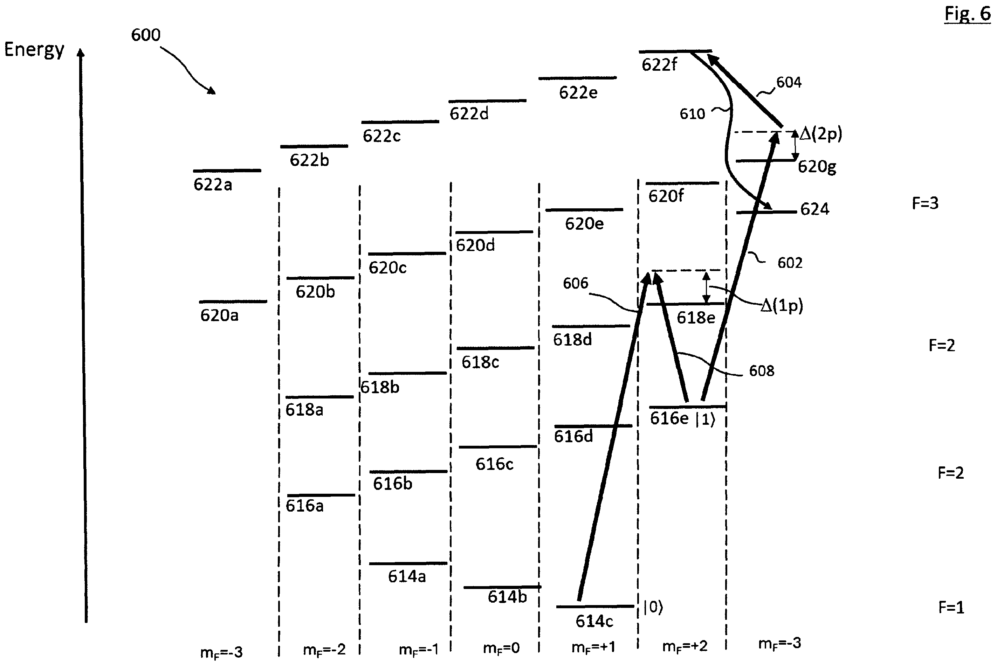

Figure 6 shows an example 600 of the atomic energy levels used by the method to prepare a Rubidium atom of a neutral atom quantum computer and then used to implement a Rydberg-based operation. The operation in this example is at least part of a two-qubit gate, such as a CCZ gate. The Rubidium atom is used as a qubit in a quantum computation. In this example 600, two different wavelength EM radiation beams are input to the atom. One EM radiation beam provides EM radiation at a wavelength of 420nm. This EM radiation is circularly polarised. The other EM radiation beam provides circularly EM radiation at a wavelength of 1013nm.

In this example, a register of identical Rubidium atoms are set-up in an array wherein the Rubidium atoms are spaced apart in a vacuum chamber. The Rubidium atoms are each held in a different optical trap. At least two adjacent Rubidium atoms are close enough to allow for a Rydberg blockade between them, given the EM radiation driving the Rydberg transition. A magnetic field is applied to the atoms, affecting a Zeeman-effect split of each energy level into sublevels. The sublevel m_{F} quantum numbers -3 to +3 are provided at the bottom of the figure and are applicable for the non-Rydberg energy states. For the Rydberg states the Zeeman effect splits energy levels. However, in Rydberg states the hyperfine splitting is extremely small (since the electron gravitates very far from the core, the core-electron interaction is negligible).

The first energy level, 5S_{1/2}, is associated with an F number of 1 and has the three sublevels 614a, 614b, 614c wherein the method uses the lowest sublevel energy state 614c (m_{F}=+1) (of the first energy level) to encode the basis state |0>. The second energy level, 5S_{1/2}, is associated with an F number of 2 and has the five sublevels 616a, 616b, 616c, 616d, 616e wherein the method uses the highest sublevel energy state 616e (of the energy level) to encode the basis state |1> (m_{F}=+2). The atom is prepared to be in this basis state using the method as described elsewhere herein. The third energy level, 5P_{1/2}, is associated with an F number of 2 and has the five sublevels 618a, 618b, 618c, 618d, 618e. The method may use the sublevels of this third energy level to pump the atom into its stretched state, encoding the basis state |1>, ready for use in the operation of this example. The atom also comprises an energy level 6P_{3/2} that is associated with an F number of 3 and hence comprises the seven sublevels 620a, 620b, 620c, 620d, 620e, 620f, 620g. The atom also comprises a Rydberg energy level nD_{5/2}, mⱼ=5/2 that comprises sublevels 622a, 622b, 622c, 622d, 622e, 622f. The two different EM radiations used for the operation are input simultaneously (or at least partially overlapping in time) to the atoms. The EM radiation of wavelength 420nm promotes 602 the atom from sublevel 616e to sublevel 620g, wherein the transition is off-resonance by an offset Δ(2P). In other words, the transition to sublevel 620g is a transition to an energy level above sublevel 620g. The EM radiation of wavelength 1013nm promotes 604 the atom from the off-resonant sublevel just above 620g, to sublevel 622f.

Each EM radiation in this example uses a polarisation state allowing for a σ⁺ transition for that part of the transition. Thus, the transitions to the Rydberg state from the basis state |1> involves a further change in orbital angular momentum that is greater than the orbital angular momentum associated with the stretched state. Correspondingly, if this example were to use a stretched state provided for in figure 3d (i.e. a minimum energy sublevel), then the two EM radiation beams to provide the Rydberg transition may use a polarisation state allowing for a σ⁻ transition. For the transitions shown in figure 6, if the Rydberg state were to undesirably decay EM radiation, then the main decay mechanism (i.e. decay path with the highest probability) would transition the atom down to the |1> basis state. Although the decay may be an error, it is an error correctable using a Z-correcting gate sequence such as that shown elsewhere herein. In other prior art schemes, such a Rydberg energy level decay would more likely lead to a leakage, hence rendering of the atom unusable as a qubit. Therefore, the method may be used to set the basis state in a stretched state and then use further EM radiation to transition to a Rydberg state with angular orbital momentum further away from the energy level corresponding to m_{F}=0; i.e. the transitions are pushing the atom to energy levels on the right hand side of figure 6. This allows for leakage reduction and increases the probability that the atom may be error corrected for in a quantum circuit in a simple manner.

The above operation has the benefit of increasing the Rabi frequency by an atypical factor of 3 for a fixed principal quantum number, effectively resulting in faster gates and hence higher gate fidelities because the state spends less time in the lossy Rydberg level. Furthermore, this scheme strongly reduces leakage errors: as the two-photon transition path is going through stretched states, the main decay channel from both the intermediate and Rydberg states is ending up in the |1> state, which therefore is a Pauli Z error. Contrary to the encoding schemes of the prior art, atoms promoted to the Rydberg energy level can only decay in the level 551/2, F=2, m_{F}=+2.

Figure 6 also shows how the same energy level system can be used to execute an operation to transition the atom from the |0> state to the |1> state. Such an operation may be a single qubit gate operation. In this example, a Raman transition is used with using an intermediate energy level sublevel 618e. EM radiation having a polarisation state providing a σ⁺ transition is input to the atom to virtually promote the atom from the |0> state to a virtual energy level above 618e, wherein the said energy virtual energy level is off resonance from 618e by an offset Δ(1P). The other EM radiation in the Raman transition is a wavelength having a polarisation state providing a π transition that virtually promotes the atom between the |1> state and the virtual energy level above 618e.

Figure 6 further shows the stretched state 624 of the 5P_{3/2} energy level that is associated with F=3. This energy level has an m_{F} of +3. This state allows for leakage reduction by being an energy state with a high probability of being leaked to from a Rydberg state. The Rydberg state that decays 610 to this stretched state of 5P_{3/2} may be a Rydberg state that the atom is excited to from a previous operation, or a different Rydberg state. For example, the Rydberg state that the atom is promoted to may decay to another different Rydberg state before further decaying to the stretched state of 5P_{3/2}. The decay between different Rydberg states may involve an emission of black body radiation.

It should be understood that the principles exemplified in figure 6 may be applied to other atom types. Such principles include any of, but not limited to: using a Zeeman stretched state to encode the |1> basis state;
using EM radiation in a single or multi-photon transition to promote the atom from the |1> state to a higher energy state, wherein the said EM radiation comprises a polarisation that changes the m_{F} value to a value either: a) greater than that of the stretched state (if the stretched state is a maximum sublevel energy); b) less than that of the stretched state (if the stretched state is a minimum sublevel energy, see figure 3d);
using a stretched intermediate energy level in a multi-photon transition; using an off-resonance transition to an intermediate state;
using EM radiation to transition the atom from an intermediate state to a Rydberg state using a polarisation that changes the orbital angular momentum to a value either: a) greater than that of the stretched state (if the stretched state is a maximum sublevel energy); b) less than that of the stretched state (if the stretched state is a minimum sublevel energy).

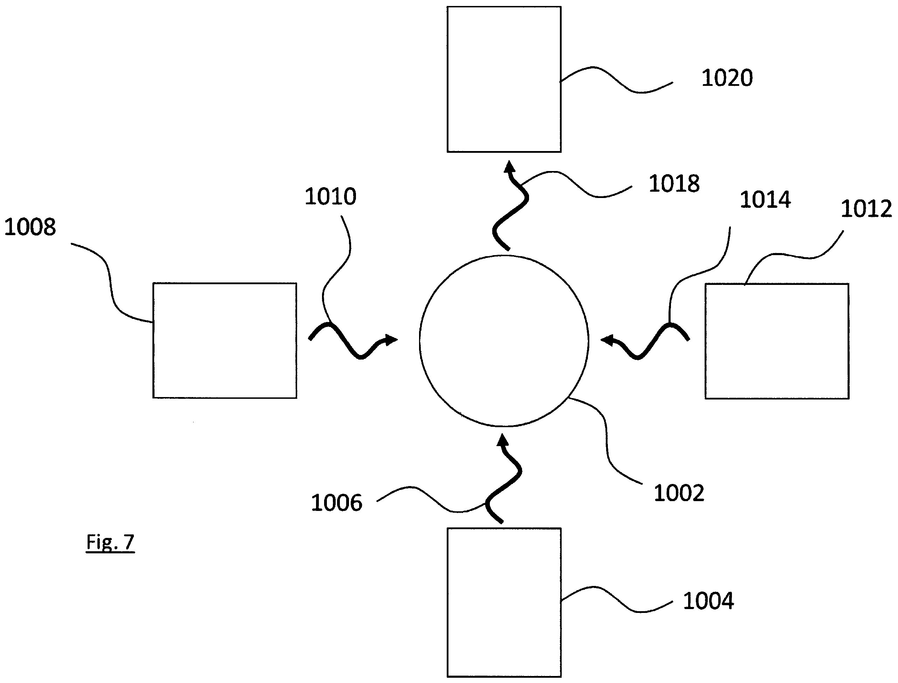

There now follows a discussion of an example quantum computing system for optional use with the method and apparatus presented herein. The following descriptions of the quantum computer may be adapted with details provided elsewhere herein such as, but not limited to: atom types; number of atoms; EM radiation parameters; and EM sources. As discussed above, the method may be applied to other quantum systems such as other quantum computers such as ion trapped quantum computers. The method may be enacted by an apparatus, a system of components, a device or a plurality of devices. Figure 7 shows a general schematic of a set-up for neutral atom quantum computer. The set-up may be referred to as a 'quantum computing system'.

As a schematic, the positions and configurations of the elements in figure 7 are not supposed to imply any real-world size, positioning or configuration of features, but merely to illustrate an example of the key functioning components of a neutral atom quantum computing system that can be used with the methods and systems discussed herein.

In figure 7, a chamber 1002 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 1002, for trapping, positioning and atomic-state-manipulating may be any suitable atom, for example, but not limited to, any of Rubidium, Caesium, Strontium and Ytterbium. Other elements or element groups may also be used. Preferably the atoms used are those having one or two valence electrons such as alkali metals and alkali earth metals however others may also be used such as rare earth elements.

A group of the atoms are held by a holding apparatus 1004. The holding apparatus 1004 acts to isolate each individual atom such that each atom, in the group, is held in a different point in space (to the other atoms of the group) within the chamber 1002. The term 'isolate' in this context means that the atoms are held away from each other, in space, and do not nominally interact (when in a non-excited atomic state) with adjacently held atoms of the same group. The atoms are thus maintained in a desired position for a period of time longer than they would be in that position if no holding apparatus 1004 were used and the atoms were allowed to move freely. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 1004 may act to maintain the atoms in their respective stationary positions using different mechanisms including, but not limited to, magnetics traps and optical traps. The holding apparatus 1004 may provide a plurality of trap sites wherein, when first activated to output the traps, typically some trap sites are filled by one or more atoms whilst other trap sites are vacant. Preferably the holding apparatus 1004 is configured to present trap sites that hold only one atom at a time. In figure 7 we assume that the holding apparatus 1004 uses one or more electromagnetic signals, such as optical signals 1006, that are input into the chamber 1002 to affect the optical traps. The electromagnetic signals may be any suitable wavelength, including but not limited to 800-1500nm, more preferably 820 - 880nm. Figure 7 shows the holding apparatus 1004 being external to the chamber 1002, however, the holding apparatus 1004 may form part of the chamber 1002 or be inside the chamber 1002. Although only a single holding apparatus 1004 is shown in figure 7, it is envisaged that more than one holding apparatus 1004 may be used.

An atom positioner 1008 is also shown in figure 7. The atom positioner 1008 is an apparatus that is able to controllably move one or more held atoms from one spatial position to another spatial position. For example, the atom positioner 1008 may move an atom trapped in one of the optical trap sites to another different trap site. Figure 7 shows the atom positioner 1008 being external to the chamber 1002, however, the atom positioner 1008 may form part of the chamber 1002 or be inside the chamber 1002. Furthermore, the atom positioner 1008 and holding apparatus 1004 may be part of the same device or system for holding and moving the atoms. The atom positioner 1008 may use different technologies to manipulate the position of the atoms including, but not limited to, moving the atoms using magnetic signals or electromagnetic signals such as optical signals 1010. The electromagnetic signals may be any suitable wavelength including, but not limited to, 800-1500nm, more preferably 820 - 880nm. In figure 7 we assume that optical signals 1010 are used such as, but not limited to, optical tweezers. Although only a single atom positioner 1008 is shown in figure 7, it is envisaged that more than one atom positioners 1008 may be used.

An atomic state actuator 1012 is also shown in figure 7. This atomic state actuator 1012 outputs one or more signals to control and manipulate the atomic states of one or more of the atoms in the chamber 1002, preferably the trapped atoms, i.e., it actuates the transition between atomic states. The signals output by the atomic state actuator 1012 are electromagnetic signals 1014 of one or more photons. Different signals may be output by the atomic state actuator 1012 including signals at different wavelengths. Each wavelength may correspond to (i.e., be resonant with, or just off-resonance with) a different atomic transition. The atomic transition may occur through single-photon absorption or multiple-photon absorption, such as two-photon absorption. This may be accomplished using two (or more) different EM sources such as lasers or other EM sources. These two EM sources may have different wavelengths.

Although only a single atomic state actuator 1012 is shown in figure 7, it is envisaged that more than one atomic state actuator 1012 may be used. For example, a first atomic state actuator 1012 may output a different wavelength or set of wavelengths than a second atomic state actuator 1012. The atomic state actuator may facilitate the transition between atomic states of a single trapped atom or a plurality of trapped atoms. For example, two or more, three or more, trapped atoms, or all of the trapped atoms. Figure 7 shows the atomic state actuator 1012 being external to the chamber 1002, however, the atomic state actuator 1012 may form part of the chamber 1002 or be inside the chamber 1002. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 1020 is also shown in figure 7. This detector 1020 is used to monitor electromagnetic signals 1018 output from the atoms in the chamber 1002. This detector 1020 may comprise a camera. The camera may be used to image the fluorescence output by the atoms held by the holding apparatus 1004. Figure 7 shows the detector 1020 being external to the chamber 1002, however, the detector 1020 may form part of the chamber 1002 or be inside the chamber 1002.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.
A) Firstly, the holding apparatus 1004 emits signals into the chamber 1002 to create a plurality of optical traps.
B) Some of the ensemble of atoms in the chamber 1002 are automatically trapped by the plurality of traps.
C) The atom positioner 1008 is then optionally used to move some, or all, of the trapped atoms between traps so that at least a particular set of the traps are each filled by an atom. This set of traps may be referred to as a 'register'. The detector 1020 may be used in this process to help identify which traps are occupied or vacant. In some examples the atom positioner 1008 may not be required.
D) The atomic state actuator 1012 outputs one or more electromagnetic signals 1014 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.
E) The detector 1020 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 7, including but not limited to: the atoms used; the atomic state actuator 1012; the atom positioner 1008; the holding apparatus 1004; the detector 1020; the general operation; may be used with any other example presented herein.

## Claims

1. A method for setting a basis state of a qubit of a quantum system; the quantum system comprising an atom for representing the qubit, wherein the atom comprises:
a first energy level (102) associated with a first basis state (|0〉) of the qubit; the first energy level (102) being a hyperfine energy level;
a second energy level (104) associated with a second basis state (|1〉) of the qubit;
the second energy level (104) being a hyperfine energy level and comprising a greater energy than the first energy level; first basis state (|0〉) being different to the second basis state (|1〉);
a third energy level (106) comprising a greater energy than the second energy level (104);
the method comprising:
I) applying a magnetic field (B) to the atom to:
A) split the second energy level (104) into a plurality of sub-levels (108a/b/c) ; each sub-level of the second energy level (104) comprising a different energy to the other sub-levels (108a/b/c) of the second energy level;
B) split the third energy level (106) into a plurality of sub-levels (110a/b/c); each sub-level of the third energy level comprising a different energy to the other sub-levels of the third energy level (106);
II) applying an Electro-Magnetic, EM, radiation (105) to the atom to cause a transition (109) from:
C) a first sub-level (108b) of the plurality of sub-levels (108a/b/c) of the second energy level (104); to,
D) a first sub-level (110c) of the sub-levels (110a/b/c) of the third energy level (106);
wherein:
i) the first sub-level (108b) of the second energy level (104) is associated with a first orbital angular momentum (MOM2);
ii) the first sub-level (110c) of the third energy level (106) is associated with a second orbital angular momentum (MOM3) that is different to the first orbital angular momentum (MOM2);
iii) the atom decays (112) from:
a. the first sub-level (110c) of the third energy level (106); to,
b. a second sub-level (108c) of the of the plurality of sub-levels of the second energy level (104); the second sub-level is associated with a third orbital angular momentum that is different to the first orbital angular momentum (MOM2);
iv) the second sub-level (108c) of the second energy level (104):
a. at least partially represents the second basis state (|1〉); and,
b. comprises either:
i. a minimum energy (108a) of the sub-levels (108a/b/c) of the second energy level (104); or,
ii. a maximum energy (108c) of the sub-levels (108a/b/c) of the second energy level (104).

2. The method as claimed in claim 1 wherein the first energy level is a ground state.

3. The method as claimed in any preceding claim wherein the second orbital angular momentum is the same absolute value of orbital angular momentum as the third orbital angular momentum.

4. The method as claimed in any preceding claim wherein the first energy level (102) and the second energy level (104) have a common principal quantum number 'n'.

5. The method as claimed in any preceding claim wherein the first sub-level (110c) of the third energy level (106) has a different value of m_{F} to the first sub-level (108b) of the second energy level (104).

6. The method as claimed in any preceding claim wherein the value of m_{F} of the first sub-level (110c) of the third energy level (106) is different to the value of m_{F} of the first sub-level (108b) of the second energy level (104), by a difference of absolute value 1.

7. The method as claimed in any preceding claim wherein the value of m_{F} of the first sub-level (110c) of the third energy level (106) is different to the value of m_{F} of the first sub-level (108b) of the second energy level (104), by a difference of +1.

8. The method as claimed in any preceding claim wherein the value of m_{F} of the first sub-level (110c) of the third energy level (106) is +2.

9. The method as claimed in any preceding claim wherein the first basis state (|0〉) is at least partially encoded on one of either:
c) a minimum energy level (114c) of the sub-levels (114a/b/c) of the first energy level (102); or,
d) a maximum energy level (114a) of the sub-levels (114a/b/c) of the first energy level (102). Optionally, the first basis state (|0〉) is fully encoded into the said one energy level.

10. The method as claimed in any preceding claim wherein the second basis state (|1>) is encoded in a Zeeman stretched state.

11. The method as claimed in any preceding claim wherein the first basis state (|0〉) is encoded in a Zeeman stretched state.

12. The method as claimed in any preceding claim wherein the method interleaves a plurality of the EM radiation pulses with a plurality of further EM radiation pulses.

13. The method as claimed in any preceding claim wherein the quantum system is a quantum computer.

14. The method as claimed in any preceding claim wherein the method comprises inputting one or more EM radiation pulses for performing an operation on the atom.

15. An apparatus for setting a basis state of a qubit of a quantum system; the quantum system comprising an atom for representing the qubit, wherein the atom comprises:
a first energy level (102) associated with a first basis state (|0〉) of the qubit; the first energy level (102) being a hyperfine energy level;
a second energy level (104) associated with a second basis state (|1〉) of the qubit;
the second energy level (104) being a hyperfine energy level and comprising a greater energy than the first energy level; first basis state (|0〉) being different to the second basis state (|1〉);
a third energy level (106) comprising a greater energy than the second energy level (104);
the apparatus comprising:
I) a magnetic field generator for applying a magnetic field (B) to the atom to:
split the second energy level (104) into a plurality of sub-levels (108a/b/c) ; each sub-level of the second energy level (104) comprising a different energy to the other sub-levels (108a/b/c) of the second energy level;
split the third energy level (106) into a plurality of sub-levels (110a/b/c); each sub-level of the third energy level comprising a different energy to the other sub-levels of the third energy level (106);
II) one or more Electromagnetic, EM, radiation sources for applying an EM, radiation (105) to the atom to cause a transition (109) from:
a first sub-level (108b) of the plurality of sub-levels (108a/b/c) of the second energy level (104); to,
a first sub-level (110c) of the sub-levels (110a/b/c) of the third energy level (106);
wherein:
the first sub-level (108b) of the second energy level (104) is associated with a first orbital angular momentum (MOM2);
the first sub-level (110c) of the third energy level (106) is associated with a second orbital angular momentum (MOM3) that is different to the first orbital angular momentum (MOM2);
the atom decays (112) from:
the first sub-level (110c) of the third energy level (106); to,
a second sub-level (108c) of the of the plurality of sub-levels of the second energy level (104); the second sub-level is associated with a third orbital angular momentum that is different to the first orbital angular momentum (MOM2);
the second sub-level (108c) of the second energy level (104):
at least partially represents the second basis state (|1〉); and, .
comprises either:
a minimum energy (108a) of the sub-levels (108a/b/c) of the second energy level (104); or,
a maximum energy (108c) of the sub-levels (108a/b/c) of the second energy level (104).
